(19) **Europäisches Patentamt / European Patent Office / Office européen des brevets**

(11) **EP 4 080 401 A1**

(12) **EUROPEAN PATENT APPLICATION**
published in accordance with Art. 153(4) EPC

(43) Date of publication:
**26.10.2022 Bulletin 2022/43**

(21) Application number: **21744118.7**

(22) Date of filing: **20.01.2021**

(51) International Patent Classification (IPC):
**G06F 40/30** (2020.01)

(52) Cooperative Patent Classification (CPC):
**G06F 40/211; G06F 40/253; G06F 40/289; G06F 40/30**

(86) International application number:
**PCT/CN2021/072782**

(87) International publication number:
**WO 2021/147875 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2020 CN 202010067906**

(71) Applicant: **Huawei Technologies Co., Ltd.
Shenzhen, Guangdong 518129 (CN)**

(72) Inventors:
• **LIAN, Hao**
  **Shenzhen, Guangdong 518129 (CN)**
• **NIE, Weiran**
  **Shenzhen, Guangdong 518129 (CN)**
• **LI, Hongguang**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TEXT SCREENING METHOD AND APPARATUS**

(57) This application provides a corpus screening method and apparatus. The corpus screening method includes: obtaining N pieces of corpus data, where each piece of corpus data is a natural sentence; performing natural language processing on a first piece of corpus data to obtain M tags, where the first piece of corpus data is any one of the N pieces of corpus data, the natural language processing includes one or more of lexical analysis, syntactic parsing, and semantic parsing, the M tags includes one or more of a part-of-speech tag, a syntactic role tag, and a semantic role label; calculating a semantic feature of the first piece of corpus data based on the M tags, where the semantic feature is configured to indicate a text semantic feature of the first piece of corpus data; calculating a contribution degree of the first piece of corpus data based on the semantic feature of the first piece of corpus data, where the contribution degree of the first piece of corpus data is configured to indicate a semantic weight of the first piece of corpus data in the N pieces of corpus data; and screening the N pieces of corpus data based on contribution degrees of the N pieces of corpus data, to obtain a corpus. This application can improve creation efficiency of a corpus and reduce costs, thereby facilitating efficient creation and iteration of a supervised learning model.

FIG. 5

**Description**

This application claims priority to Chinese Patent Application No. 202010067906.0, filed with the China National Intellectual Property Administration on January 20, 2020 and entitled "CORPUS SCREENING METHOD AND APPARATUS", which is incorporated herein by reference in its entirety.

**TECHNICAL FIELD**

This application relates to natural language processing technologies, and in particular, to a corpus screening method and apparatus.

**BACKGROUND**

Natural language processing (natural language processing, NLP) is an important direction in the field of computer science and the field of artificial intelligence. It studies various theories and methods that can implement effective communication between a human being and a computer by using a natural language. Implementing natural language communication between the human being and the computer means that the computer can not only understand a meaning of a natural language text, but also can express a specified intent, a specified idea, and the like by using the natural language text. Therefore, natural language processing is a science that integrates linguistics, computer science, and mathematics. Currently, study on natural language processing includes lexical analysis, syntactic parsing, and semantic parsing. Lexical analysis segments one or more target words from a sentence. Syntactic parsing makes a relationship between these words clear. Therefore, syntactic parsing inputs a word string (which may contain attributes such as a part-of-speech), and outputs a syntactical structure of the sentence. Semantic parsing implements a more semantic formal expression based on lexical analysis and syntactic parsing.

The conventional technology mostly focuses on features such as a sentence length, a keyword, and a notional word of corpus data. Based on development of deep learning, a once-for-all supervised learning model is desired to automatically express a text feature by using a black box method such as a word vector. However, it is difficult to give a reasonable explanation for a black-box feature, and generally, the black-box feature does not conform to a Chinese language habit.

In a related corpus screening method, a large-scale corpus is randomly divided into N subsets, and each subset is manually labeled, to construct a first corpus data set. Some subsets As are selected and input into a model through K-Fold cross-validation for training. When a model prediction result meets a preset condition, As are added to a standard corpus. When the model predication result does not meet a preset condition, addition or deletion is performed on As according to a preset topic dictionary until the model trained by using As meets the preset condition, and the finally obtained As are added to the standard corpus. Through the foregoing iteration, the standard corpus is a subset screened from the large-scale corpus.

However, the foregoing method greatly depends on manual labeling, and corpus data is randomly selected to construct a subset, so that no unified standard is established, costs are high, and efficiency is low. This is not conducive to efficient creation or update of the supervised learning model.

**SUMMARY**

This application provides a corpus screening method and apparatus, to improve creation efficiency of a corpus and reduce costs, thereby facilitating efficient creation and iteration of a supervised learning model.

According to a first aspect, this application provides a corpus screening method, including:
obtaining N pieces of corpus data, where each piece of corpus data is a natural sentence, and N is a positive integer; performing natural language processing on a first piece of corpus data to obtain M tags, where the first piece of corpus data is any one of the N pieces of corpus data, the natural language processing includes one or more of lexical analysis, syntactic parsing, and semantic parsing, the M tags includes one or more of a part-of-speech tag, a syntactic role tag, and a semantic role label, and M is a positive integer; calculating a semantic feature of the first piece of corpus data based on the M tags, where the semantic feature is configured to indicate a text semantic feature of the first piece of corpus data; calculating a contribution degree of the first piece of corpus data based on the semantic feature of the first piece of corpus data, where the contribution degree of the first piece of corpus data is configured to indicate a semantic weight of the first piece of corpus data in the N pieces of corpus data; and screening the N pieces of corpus data based on contribution degrees of the N pieces of corpus data, to obtain a corpus.

In this application, one or more tags of the corpus data are obtained by using an NLP technology, a semantic contribution degree of each piece of to-be-screened corpus data is calculated based on the tags, and then the corpus data is screened based on the semantic contribution degree, to obtain the corpus. The corpus covers a large amount of universal set information in terms of syntax and semantics, and a unified standard is provided for corpus screening. This not only can help an annotator screen a subset from a huge corpus, but also can improve efficiency and reduce costs, thereby facilitating efficient creation and iteration of the supervised learning model.

In a possible implementation, before the performing natural language processing on a first piece of corpus data to obtain M tags, the method further includes: performing word segmentation processing on the first piece of corpus data to obtain K target words; and the performing natural language processing on a first piece of corpus data to obtain M tags includes one or more of the following methods: performing part-of-speech tagging on the K target words to obtain K part-of-speech tags, where each target word corresponds to one part-of-speech tag; performing dependency syntactic parsing on the K target words to obtain K syntactic role tags, where each target word corresponds to one syntactic role tag; and performing semantic role labeling on the K target words to obtain L semantic role labels, where each semantic role label corresponds to one phrase, the phrase includes one or more of the target words, and L is a positive integer.

In a possible implementation, the semantic feature includes an intra-semantic-role syntactic role feature and an intra-semantic-role part-of-speech feature that are of the first piece of corpus data, and the calculating a semantic feature of the first piece of corpus data based on the M tags includes: calculating the intra-semantic-role syntactic role feature based on the K syntactic role tags and the L semantic role labels; and calculating the intra-semantic-role part-of-speech feature based on the K part-of-speech tags and the L semantic role labels.

In a possible implementation, the calculating a contribution degree of the first piece of corpus data based on the semantic feature of the first piece of corpus data includes: calculating a contribution degree of a first target word based on the intra-semantic-role syntactic role feature and the intra-semantic-role part-of-speech feature, where the first target word is a target word that is in the K target words and that corresponds to a first syntactic role tag, and the first syntactic role tag is any one of the K syntactic role tags; calculating a contribution degree of a first phrase based on the contribution degree of the first target word, where the first phrase includes the first target word and is a phrase that is in the first piece of corpus data and that corresponds to a first semantic role label, and the first semantic role label is one of the L semantic role labels; and calculating a contribution degree of the first piece of corpus data based on the contribution degree of the first phrase.

In this application, one or more tags of the corpus data are obtained by using an NLP technology, the contribution degree of the target word in the corpus data is first calculated based on the tags, then the contribution degree of the phrase including the target word is calculated, and finally a semantic contribution degree of the corpus data including the phrase is calculated. The corpus data is screened based on the semantic contribution degree of each piece of corpus data, to obtain the corpus. The corpus covers a large amount of universal set information in terms of syntax and semantics, and a unified standard is provided for corpus screening. This not only can help an annotator screen a subset from a huge corpus, but also can improve efficiency and reduce costs, thereby facilitating efficient creation and iteration of the supervised learning model.

In a possible implementation, the screening the N pieces of corpus data based on contribution degrees of the N pieces of corpus data, to obtain a corpus includes: sorting the N pieces of corpus data in descending order of contribution degrees, and selecting first n pieces of corpus data to constitute the corpus, where n is a preset value.

In a possible implementation, the screening the N pieces of corpus data based on contribution degrees of the N pieces of corpus data, to obtain a corpus includes: obtaining weights of all second target words, where the second target word is a target word that is in the N pieces of corpus data and that is tagged as a specified predicate; for each second target word, sorting, in descending order of contribution degrees, all second pieces of corpus data that includes the second target word, where the N pieces of corpus data include all the second pieces of corpus data; and extracting, based on the weight of the second target word, a related quantity of the second pieces of corpus data from all the second pieces of corpus data that includes the second target word, and adding the second pieces of corpus data to the corpus.

In a possible implementation, the screening the N pieces of corpus data based on contribution degrees of the N pieces of corpus data, to obtain a corpus includes: obtaining weights of all second phrases, where the second phrase is a phrase that is in the N pieces of corpus data and that is labeled as a specified semantic role label; for each second phrase, sorting, in descending order of contribution degrees, all third pieces of corpus data that includes the second phrase, where the N pieces of corpus data include all the third pieces of corpus data; and extracting, based on the weight of the second phrase, a related quantity of the third pieces of corpus data from all the third pieces of corpus data that includes the second phrase, and adding the third pieces of corpus data to the corpus.

In a possible implementation, the calculating the intra-semantic-role syntactic role feature based on the K syntactic role tags and the L semantic role labels includes: calculating, as the intra-semantic-role syntactic role feature, a first percentage of a quantity of target words included in a first target word set to a quantity of target words included in a second target word set, where the second target word set includes all target words in a phrase that is in the first piece of corpus data and that corresponds to a second semantic role label, the second semantic role label is any one of the L semantic role labels, the first target word set includes all target words that are in the second target word set and that correspond to a first syntactic role tag, and the first syntactic role tag is any one of syntactic role tags respectively corresponding to all target words in the second target word set.

In a possible implementation, the calculating the intra-semantic-role part-of-speech feature based on the K part-of-speech tags and the L semantic role labels includes: calculating, as the intra-semantic-role part-of-speech feature, a second percentage of a quantity of target words included in a third target word set to a quantity of target words included in a second target word set, where the second target word set includes all target words in a phrase that is in the first piece of corpus data and that corresponds to a second semantic role label, the second semantic role label is any one of the L semantic role labels, the third target word set includes all target words that are in the second target word set and that correspond to a first part-of-speech tag, and the first part-of-speech tag is any one of part-of-speech tags respectively corresponding to all target words in the second target word set.

In a possible implementation, the semantic feature further includes a predicate quantity feature, and the calculating a semantic feature of the first piece of corpus data based on the M tags further includes: calculating, as the predicate quantity feature, a third percentage of a quantity of target words included in a fourth target word set to a quantity of target words included in a fifth target word set, where the fourth target word set includes all target words that are in the N pieces of corpus data and that are tagged as a first predicate, the fifth target word set includes all target words that are in the N pieces of corpus data and that are tagged as any predicate, and the first predicate is any one of the predicates; before the screening the N pieces of corpus data based on contribution degrees of the N pieces of corpus data, to obtain a corpus, the method further includes: calculating, based on the predicate quantity feature and the contribution degrees of the N pieces of corpus data, contribution degrees of all target words that are in the N pieces of corpus data and that are tagged as any predicate; and the screening the N pieces of corpus data based on contribution degrees of the N pieces of corpus data, to obtain a corpus includes: sorting, in descending order of contribution degrees, all target words that are in the N pieces of corpus data and that are tagged as any predicate, and selecting corpus data that includes the first n target words to constitute the corpus.

In this application, based on the contribution degree of the target word tagged as the predicate in the corpus data and with reference to a semantic contribution degree of each piece of corpus data, the corpus data is screened from a perspective of the predicate included in the corpus data, to obtain the corpus. The corpus covers a large amount of universal set information in terms of syntax and semantics, and a unified standard is provided for corpus screening. This not only can help an annotator screen a subset from a huge corpus, but also can improve efficiency and reduce costs, thereby facilitating efficient creation and iteration of the supervised learning model.

In a possible implementation, the semantic feature further includes a semantic role feature, and the calculating a semantic feature of the first piece of corpus data based on the M tags further includes: calculating, as the semantic role feature, a fourth percentage of a quantity of first semantic role labels included in the N pieces of corpus data to a quantity of all semantic role labels included in the N pieces of corpus data, where the first semantic role label is any one of all the semantic role labels; and before the screening the N pieces of corpus data based on contribution degrees of the N pieces of corpus data, to obtain a corpus, the method further includes: calculating, based on the semantic role feature and the contribution degrees of the N pieces of corpus data, a contribution degree of a phrase that is in the N pieces of corpus data and that corresponds to any semantic role label; and the screening the N pieces of corpus data based on contribution degrees of the N pieces of corpus data, to obtain a corpus includes: sorting, in descending order of contribution degrees, phrases that are in the N pieces of corpus data and that correspond to all semantic role labels, and selecting corpus data that includes the first n phrases to constitute the corpus.

In this application, based on the contribution degree of the target word tagged as the predicate in the corpus data and with reference to a semantic contribution degree of each piece of corpus data, the corpus data is screened from a perspective of the semantic role included in the corpus data, to obtain the corpus. The corpus covers a large amount of universal set information in terms of syntax and semantics, and a unified standard is provided for corpus screening. This not only can help an annotator screen a subset from a huge corpus, but also can improve efficiency and reduce costs, thereby facilitating efficient creation and iteration of the supervised learning model.

According to a second aspect, this application provides a corpus screening apparatus, including:
an obtaining module, configured to obtain N pieces of corpus data, where each piece of corpus data is a natural sentence, and N is a positive integer; a processing module, configured to: perform natural language processing on a first piece of corpus data to obtain M tags, where the first piece of corpus data is any one of the N pieces of corpus data, the natural language processing includes one or more of lexical analysis, syntactic parsing, and semantic parsing, the M tags includes one or more of a part-of-speech tag, a syntactic role tag, and a semantic role label, and M is a positive integer; calculate a semantic feature of the first piece of corpus data based on the M tags, where the semantic feature is configured to indicate a text semantic feature of the first piece of corpus data; and calculate a contribution degree of the first piece of corpus data based on the semantic feature of the first piece of corpus data, where the contribution degree of the first piece of corpus data is configured to indicate a semantic weight of the first piece of corpus data in the N pieces of corpus data; and a screening module, configured to screen the N pieces of corpus data based on contribution degrees of the N pieces of corpus data, to obtain a corpus.

In a possible implementation, the processing module is further configured to: perform word segmentation processing on the first piece of corpus data to obtain K target words; perform part-of-speech tagging on the K target words to obtain K part-of-speech tags, where each target word corresponds to one part-of-speech tag; perform dependency syntactic parsing on the K target words to obtain K syntactic role tags, where each target word corresponds to one syntactic role tag; and perform semantic role labeling on the K target words to obtain L semantic role labels, where each semantic role label corresponds to one phrase, the phrase includes one or more of the target words, and L is a positive integer.

In a possible implementation, the semantic feature includes an intra-semantic-role syntactic role feature and an intra-semantic-role part-of-speech feature that are of the first piece of corpus data; and the processing module is specifically configured to: calculate the intra-semantic-role syntactic role feature based on the K syntactic role tags and the L semantic role labels; and calculate the intra-semantic-role part-of-speech feature based on the K part-of-speech tags and the L semantic role labels.

In a possible implementation, the processing module is specifically configured to: calculate a contribution degree of a first target word based on the intra-semantic-role syntactic role feature and the intra-semantic-role part-of-speech feature, where the first target word is a target word that is in the K target words and that corresponds to a first syntactic role tag, and the first syntactic role tag is any one of the K syntactic role tags; calculate a contribution degree of a first phrase based on the contribution degree of the first target word, where the first phrase includes the first target word and is a phrase that is in the first piece of corpus data and that corresponds to a first semantic role label, and the first semantic role label is one of the L semantic role labels; and calculate a contribution degree of the first piece of corpus data based on the contribution degree of the first phrase.

In a possible implementation, the screening module is specifically configured to sort, in descending order of contribution degrees, the N pieces of corpus data, and select first n pieces of corpus data to constitute the corpus, where n is a preset value.

In a possible implementation, the screening module is specifically configured to: obtain weights of all second target words, where the second target word is a target word that is in the N pieces of corpus data and that is tagged as a specified predicate; for each second target word, sort, in descending order of contribution degrees, all second pieces of corpus data that includes the second target word, where the N pieces of corpus data include all the second pieces of corpus data; and extract, based on the weight of the second target word, a related quantity of the second pieces of corpus data from all the second pieces of corpus data that includes the second target word, and add the second pieces of corpus data to the corpus.

In a possible implementation, the screening module is specifically configured to: obtain weights of all second phrases, where the second phrase is a phrase that is in the N pieces of corpus data and that is labeled as a specified semantic role label; for each second phrase, sort, in descending order of contribution degrees, all third pieces of corpus data that includes the second phrase, where the N pieces of corpus data include all the third pieces of corpus data; and extract, based on the weight of the second phrase, a related quantity of the third pieces of corpus data from all the third pieces of corpus data that includes the second phrase, and add the third pieces of corpus data to the corpus.

In a possible implementation, the processing module is specifically configured to: calculate, as the intra-semantic-role syntactic role feature, a first percentage of a quantity of target words included in a first target word set to a quantity of target words included in a second target word set, where the second target word set includes all target words in a phrase that is in the first piece of corpus data and that corresponds to a second semantic role label, the second semantic role label is any one of the L semantic role labels, the first target word set includes all target words that are in the second target word set and that correspond to a first syntactic role tag, and the first syntactic role tag is any one of syntactic role tags respectively corresponding to all target words in the second target word set.

In a possible implementation, the processing module is specifically configured to: calculate, as the intra-semantic-role part-of-speech feature, a second percentage of a quantity of target words included in a third target word set to a quantity of target words included in a second target word set, where the second target word set includes all target words in a phrase that is in the first piece of corpus data and that corresponds to a second semantic role label, the second semantic role label is any one of the L semantic role labels, the third target word set includes all target words that are in the second target word set and that correspond to a first part-of-speech tag, and the first part-of-speech tag is any one of part-of-speech tags respectively corresponding to all target words in the second target word set.

In a possible implementation, the semantic feature further includes a predicate quantity feature; the processing module is further configured to: calculate, as the predicate quantity feature, a third percentage of a quantity of target words included in a fourth target word set to a quantity of target words included in a fifth target word set, where the fourth target word set includes all target words that are in the N pieces of corpus data and that are tagged as a first predicate, the fifth target word set includes all target words that are in the N pieces of corpus data and that are tagged as any predicate, and the first predicate is any one of the predicates; and calculate, based on the predicate quantity feature and the contribution degrees of the N pieces of corpus data, contribution degrees of all target words that are in the N pieces of corpus data and that are tagged as any predicate. The screening module is further configured to sort, in descending order of contribution degrees, all target words that are in the N pieces of corpus data and that are tagged as any predicate, and select corpus data that includes the first n target words to constitute the corpus.

In a possible implementation, the semantic feature further includes a semantic role feature, and the processing module is further configured to: calculate, as the semantic role feature, a fourth percentage of a quantity of first semantic role labels included in the N pieces of corpus data to a quantity of all semantic role labels included in the N pieces of corpus data, where the first semantic role label is any one of all the semantic role labels; and calculate, based on the semantic role feature and the contribution degrees of the N pieces of corpus data, a contribution degree of a phrase that is in the N pieces of corpus data and that corresponds to any semantic role label. The screening module is further configured to sort, in descending order of contribution degrees, phrases that are in the N pieces of corpus data and that correspond to all semantic role labels, and select corpus data that includes the first n phrases to constitute the corpus.

According to a third aspect, this application provides a device, including: one or more processors; and a memory, configured to store one or more programs, where when the one or more programs are executed by the one or more processors, the one or more processors are enabled to implement the method according to any one of the possible implementations of the first aspect.

According to a fourth aspect, this application provides a computer-readable storage medium, including a computer program. When the computer program is executed on a computer, the computer is enabled to perform the method according to any one of the possible implementations of the first aspect.

According to a fifth aspect, this application provides a computer program, where when the computer program is executed by a computer, the computer program is configured to perform the method according to any one of the possible implementations the first aspect.

**BRIEF DESCRIPTION OF DRAWINGS**

FIG. 1 is a schematic diagram of a research direction of an NLP technology;
FIG. 2 is a block diagram of an example of a corpus screening framework according to this application;
FIG. 3 is a block diagram of a structure of an example of a server 300 according to this application;
FIG. 4 is a schematic diagram of a structure of an example of a terminal device 400;
FIG. 5 is a flowchart of an embodiment of a corpus screening method according to this application; and
FIG. 6 is a schematic diagram of a structure of an embodiment of a corpus screening apparatus according to this application.

**DESCRIPTION OF EMBODIMENTS**

To make the objectives, technical solutions, and advantages of this application clearer, the following clearly and completely describes the technical solutions in this application with reference to the accompanying drawings in this application. Obviously, the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, and c may indicate a, b, c, "a and b", "a and c", "b and c", or "a, b, and c", where a, b, and c may be singular or plural.

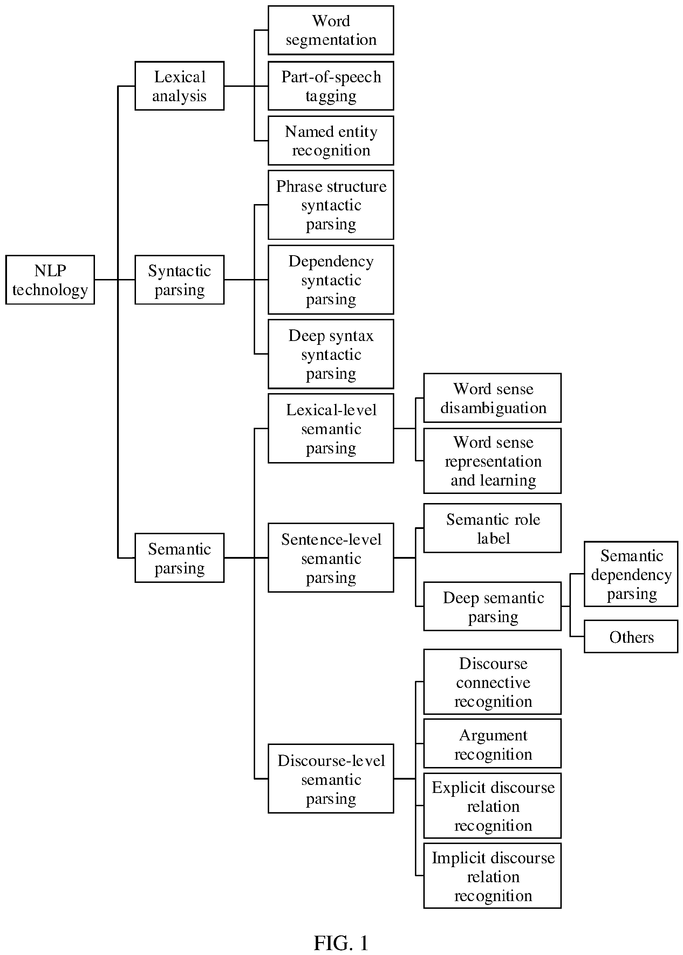

This application provides a corpus screening framework, to obtain a semantic feature of corpus data based on an NLP technology and in compliance with a Chinese language habit from three perspectives: lexical analysis, syntactic parsing, and semantic parsing. FIG. 1 is a schematic diagram of a research direction of an NLP technology. As shown in FIG. 1, the NLP technology includes three research directions: lexical analysis, syntactic parsing, and semantic parsing. The lexical analysis includes word segmentation, part-of-speech tagging, and named entity recognition. The syntactic parsing includes phrase structure syntactic parsing, dependency syntactic parsing, and deep syntax syntactic parsing. The semantic parsing includes lexical-level semantic parsing, sentence-level semantic parsing, and discourse-level semantic parsing. The lexical-level semantic parsing includes word sense disambiguation, word sense representation, and learning. The sentence-level semantic parsing includes semantic role labeling and deep semantic parsing. The deep semantic parsing includes semantic dependency parsing and others. The discourse-level semantic parsing includes discourse connective recognition, argument recognition, explicit discourse relation recognition, and implicit discourse relation recognition. The corpus screening framework provided in this application mainly relates to the foregoing four technologies: word segmentation, part-of-speech tagging, dependency syntactic parsing, and semantic role labeling. The word segmentation technology mainly segments a target word from a piece of corpus data (that is, a language material, the corpus data is a basic unit for forming a corpus, may be replaced with a text, and a context relation in the text is used as a substitute for a context relation of a language in the real world. Generally, a text set is referred to as the corpus (corpus). When there are a plurality of text sets, the text sets may be referred to as corpora (corpora)). The part-of-speech tagging technology mainly analyzes a part-of-speech of a target word in the corpus data, and tag a part-of-speech of each target word. The dependency syntactic parsing technology mainly parses a relation between target words in the corpus data, and tags a syntactic role of each target word. The semantic role labeling technology mainly analyzes a semantic role of a phrase in the corpus data, and labels a semantic role of each semantic phrase. The phrase includes one or more of the target words. Generally, each target word in the corpus data may be tagged as a syntactic role, but not each target word may be labeled as a semantic role. This is related to a specific implementation of the semantic role labeling technology, and details are not described herein again. Based on the NLP technology shown in FIG. 1, in this application, natural language processing is performed on to-be-screened corpus data, to obtain a target word included in the corpus data, and a plurality of annotations (including a part-of-speech tag, a syntactic role tag, and/or a semantic role label) obtained through processing using the foregoing four technologies.

In this application, the foregoing plurality of annotations are used as input of the corpus screening framework, to obtain a semantic feature of the corpus data. The semantic feature is a more semantic formal expression of the corpus data. Then, a semantic contribution degree of the corpus data is calculated based on the semantic feature of the corpus data, and finally the corpus data is screened based on the semantic contribution degree to obtain the corpus. The corpus is a large-scale electronic text library sampled and processed by science. Based on the corpus and with the help of a computer analysis tool, a researcher can carry out related language theory and application research. The corpus is a basic resource of corpus linguistics research, is also a main resource of an empiric language research method, and may be applied to dictionary compilation, language teaching, traditional language research, statistics-based or instance-based research in NLP, and the like. The corpus stores a language material that actually appears in actual use of a language, and carries a basic resource of a language knowledge by using an electronic computer as a carrier. Real corpus data can become a useful resource only after being processed (analyzed and handled).

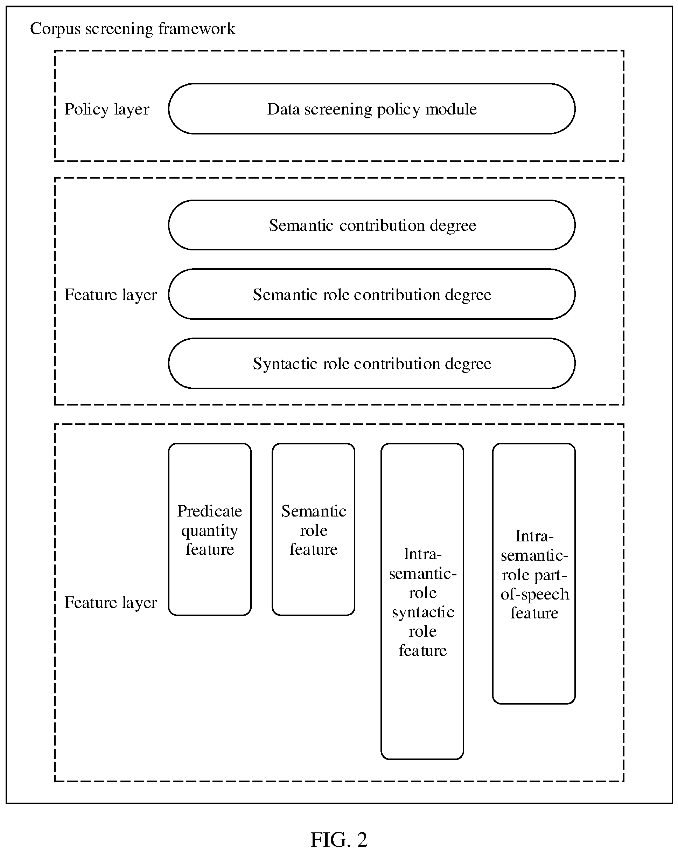

FIG. 2 is a block diagram of an example of a corpus screening framework according to this application. As shown in FIG. 2, the framework includes a feature layer, a contribution layer, and a policy layer. The feature layer includes a predicate quantity feature module, a semantic role feature module, an intra-semantic-role syntactic role feature module, and an intra-semantic-role part-of-speech feature module. The contribution layer includes a syntactic role contribution degree module, a semantic role contribution degree module, and a semantic contribution degree module. The policy layer includes a data screening policy module. The feature layer quantitatively describes a semantic feature of corpus data based on processing results of four technologies: word segmentation, part-of-speech tagging, dependency syntactic parsing, and semantic role labeling (that is, a target word included in the corpus data, and a plurality of annotations (including a part-of-speech tag, a syntactic role tag, and/or a semantic role label) obtained through processing using the four technologies). The semantic feature may include one or more of a predicate quantity feature, a semantic role feature, an intra-semantic-role syntactic role feature, and an intra-semantic-role part-of-speech feature. The contribution layer first defines a syntactic role contribution degree (through which a contribution degree of each syntactic role within a coverage range of each semantic role label is calculated after a syntactic role tag and a semantic role label are added to corpus data), then defines a semantic role contribution degree based on the syntactic role contribution degree (through which, for each semantic role label, a contribution degree of the semantic role is calculated based on a contribution degree of each syntactic role within a coverage range of the semantic role label), and then defines a semantic contribution degree based on the semantic role contribution degree (through which, for each piece of corpus data, a contribution degree of the corpus data is calculated based on a contribution degree of a semantic role included in the corpus data). Alternatively, the contribution layer may define a global predicate contribution degree or a global semantic role contribution degree in all corpus data based on the foregoing semantic contribution degree. The policy layer defines a corpus screening policy. The policy may be customized based on an application scenario of a supervised learning model, thereby providing a screening policy based on the semantic contribution degree, the global predicate contribution degree, and/or the global semantic role contribution degree.

The corpus screening framework provided in this application may be implemented by a corpus screening apparatus. The corpus screening apparatus may be implemented by a server. The server implements the foregoing functions to complete corpus data collection and screening. In this way, a corpus is created. Alternatively, the corpus screening apparatus may be jointly implemented by a server and a terminal device. The terminal device collects corpus data and transmits the corpus data to the server, and the server performs NLP on the corpus data to implement the foregoing functions for corpus screening. In this way, a corpus is created. Alternatively, the server collects corpus data, performs NLP on the corpus data, and transmits corpus data with an annotation to the server, and the server completes corpus screening based on the corpus data with the annotation. In this way, a corpus is created. Data transmission may be implemented between the server and the terminal device through a communication network.

It should be noted that, the communication network may be a local area network, or may be a wide area network for switch over through a relay (relay) device, or may include a local area network and a wide area network. When the communication network is the local area network, for example, the communication network may be a short-range communication network such as a Wi-Fi hotspot network, a Wi-Fi P2P network, a Bluetooth network, a ZigBee network, or a near field communication (near field communication, NFC) network. When the communication network is the wide area network, for example, the communication network may be a 3rd generation mobile communication technology (3rd generation mobile communication technology, 3G) network, a 4th generation mobile communication technology (the 4th generation mobile communication technology, 4G) network, a 5th generation mobile communication technology (5th generation mobile communication technology, 5G) network, a future evolved public land mobile network (public land mobile network, PLMN), or an internet. This is not limited in this embodiment of this application.

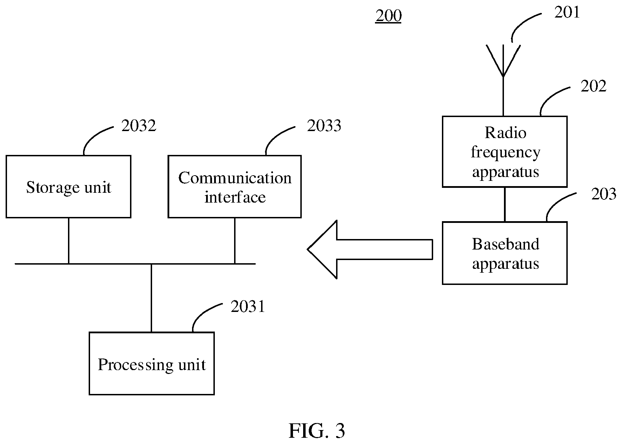

FIG. 3 is a block diagram of a structure of an example of a server 300 according to this application. As shown in FIG. 3, the server 300 includes an antenna 301, a radio frequency apparatus 302, and a baseband apparatus 303. The antenna 301 is connected to the radio frequency apparatus 302. In an uplink direction, the radio frequency apparatus 302 receives, through the antenna 301, a signal from a terminal device, and sends the received signal to the baseband apparatus 303 for processing. In a downlink direction, the baseband apparatus 303 generates a signal that needs to be sent to the terminal device, and sends the generated signal to the radio frequency apparatus 302. The radio frequency apparatus 302 transmits the signal through the antenna 301.

The baseband apparatus 303 may include one or more processing units 3031. The processing unit 3031 may be specifically a processor.

In addition, the baseband apparatus 303 may further include one or more storage units 3032 and one or more communication interfaces 3033. The storage unit 3032 is configured to store a computer program and/or data. The communication interface 3033 is configured to exchange information with the radio frequency apparatus 302. The storage unit 3032 may be specifically a memory, and the communication interface 3033 may be an input/output interface or a transceiver circuit.

Optionally, the storage unit 3032 may be a storage unit located on a same chip as the processing unit 3031, namely, an on-chip storage unit, or may be a storage unit located on a different chip from the processing unit 3031, namely, an off-chip storage unit. This is not limited in this application.

The terminal device may also be referred to as user equipment (user equipment, UE), and may be deployed on land, including an indoor or outdoor scenario and a handheld or in-vehicle scenario, or may be deployed on water (for example, on a steamship), or may be deployed in the air (for example, on an airplane, a balloon, or a satellite). The terminal device may be a mobile phone (mobile phone), a tablet computer (pad), a wearable device having a wireless communication function (such as a smartwatch), a location tracker with a locating function, a computer with a wireless transceiver function, a virtual reality (virtual reality, VR) device, an augmented reality (augmented reality, AR) device, a wireless device in industrial control (industrial control), a wireless device in self driving (self driving), a wireless device in telemedicine (telemedicine), a wireless device in a smart grid (smart grid), a wireless device in transportation safety (transportation safety), a wireless device in a smart city (smart city), a wireless device in a smart home (smart home), or the like. This is not limited in embodiments of this application.

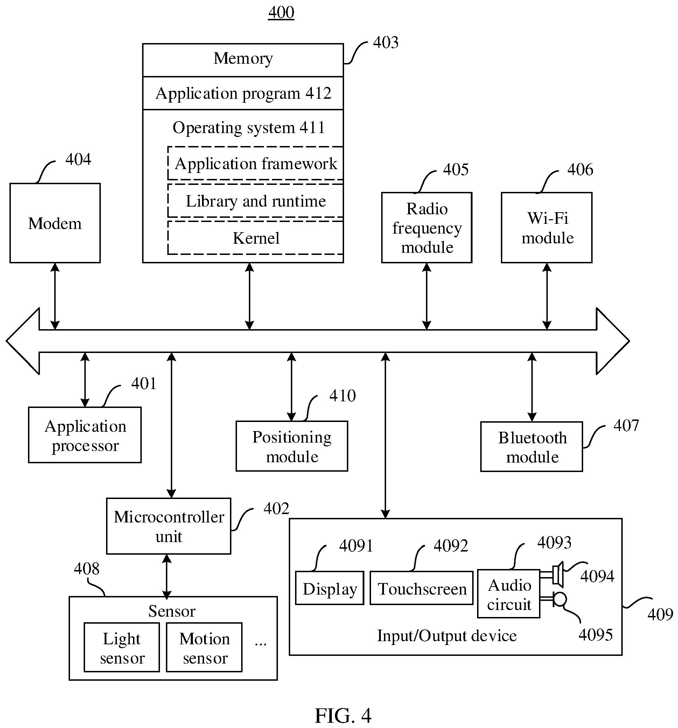

FIG. 4 is a schematic diagram of a structure of an example of a terminal device 400. As shown in FIG. 4, the terminal device 400 includes components such as an application processor 401, a microcontroller unit (microcontroller unit, MCU) 402, a memory 403, a modem (modem) 404, a radio frequency (radio frequency, RF) module 405, a Wireless-Fidelity (Wireless-Fidelity, Wi-Fi for short) module 406, a Bluetooth module 407, a sensor 408, an input/output (input/output, I/O) device 409, and a positioning module 410. These components can communicate with each other through one or more communication buses or signal cables. A person skilled in the art may understand that, the terminal device 400 may include more or fewer components than those shown in the diagram, or some components may be combined, or the components may be disposed in a different manner.

The following specifically describes the components in the terminal device 400 with reference to FIG. 4.

The application processor 401 is a control center of the terminal device 400, and is connected to the components of the terminal device 400 through various interfaces and various buses. In some embodiments, the processor 401 may include one or more processing units.

The memory 403 stores a computer program, such as an operating system 411 and an application program 412 that are shown in FIG. 4. The application processor 401 is configured to execute the computer program in the memory 403, to implement a function defined by the computer program. For example, the application processor 401 executes the operating system 411 to implement various functions of the operating system on the terminal device 400. The memory 403 further stores other data in addition to the computer program, such as data generated during running of the operating system 411 and the application program 412. The memory 403 is a non-volatile storage medium, and generally includes an internal memory and an external memory. The internal memory includes, but is not limited to, a random access memory (random access memory, RAM), a read-only memory (read-only memory, ROM), a cache (cache), or the like. The external memory includes, but is not limited to, a flash memory (flash memory), a hard disk, a compact disc, a universal serial bus (universal serial bus, USB) flash drive, or the like. The computer program is usually stored in the external memory. Before executing the computer program, the processor loads the program from the external memory to the internal memory.

The memory 403 may be independent, and is connected to the application processor 401 through a bus. Alternatively, the memory 403 and the application processor 401 may be integrated into a chip subsystem.

The MCU 402 is a coprocessor configured to obtain and process data from the sensor 408. The MCU 402 has a processing capability and power consumption lower than those of the application processor 401, but has a feature of "always on (always on)", and can continuously collect and process the data from the sensor when the application processor 401 is in a sleep mode, to ensure normal running of the sensor with low power consumption. In an embodiment, the MCU 402 may be a sensor hub chip. The sensor 408 may include a light sensor and a motion sensor. Specifically, the light sensor may include an ambient light sensor and a proximity sensor. The ambient light sensor may be configured to adjust luminance of a display 4091 based on brightness of ambient light. The proximity sensor may power off a display screen when the terminal device 400 moves to an ear. As a type of motion sensor, an accelerometer sensor may detect values of accelerations in various directions (generally three axes), and may detect a value and a direction of gravity when the accelerometer sensor is still. The sensor 408 may further include another sensor such as a gyroscope, a barometer, a hygrometer, a thermometer, or an infrared sensor. Details are not described herein. The MCU 402 and the sensor 408 may be integrated into a same chip, or may be separate components and are connected through a bus.

The modem 404 and the radio frequency module 405 constitute a communication subsystem of the terminal device 400, and are configured to implement main functions of a wireless communication standard protocol. The modem 404 is configured to perform coding/decoding, signal modulation/demodulation, equalization, and the like. The radio frequency module 405 is configured to receive and send a radio signal, and the radio frequency module 405 includes but is not limited to an antenna, at least one amplifier, a coupler, a duplexer, and the like. The radio frequency module 405 cooperates with the modem 404 to implement a wireless communication function. The modem 404 may be used as an independent chip, or may be combined with another chip or circuit to form a system-level chip or an integrated circuit. These chips or integrated circuits may be applied to all terminal devices that implement the wireless communication function, including a mobile phone, a computer, a notebook computer, a tablet, a router, a wearable device, a vehicle, a household appliance, and the like.

The terminal device 400 may further perform wireless communication through the Wi-Fi module 406, the Bluetooth module 407, and the like. The Wi-Fi module 406 is configured to provide, for the terminal device 400, network access that complies with a Wi-Fi related standard protocol. The terminal device 400 may access a Wi-Fi access point through the Wi-Fi module 406, to access the internet. In some other embodiments, the Wi-Fi module 406 may alternatively be used as a Wi-Fi wireless access point, and may provide Wi-Fi network access for another terminal device. The Bluetooth module 407 is configured to implement short-range communication between the terminal device 400 and another terminal device (for example, a mobile phone or a smartwatch). The Wi-Fi module 406 in this embodiment of this application may be an integrated circuit, a Wi-Fi chip, or the like, and the Bluetooth module 407 may be an integrated circuit, a Bluetooth chip, or the like.

The positioning module 410 is configured to determine a geographical location of the terminal device 400. It may be understood that the positioning module 410 may be specifically a receiver of a positioning system such as a global positioning system (global positioning system, GPS), a BeiDou navigation satellite system, or a Russian GLONASS.

The Wi-Fi module 406, the Bluetooth module 407, and the positioning module 410 may be independent chips or integrated circuits, or may be integrated together. For example, in an embodiment, the Wi-Fi module 406, the Bluetooth module 407, and the positioning module 410 may be integrated into a same chip. In another embodiment, the Wi-Fi module 406, the Bluetooth module 407, the positioning module 410, and the MCU 402 may also be integrated into a same chip.

The input/output device 409 includes but is not limited to the display 4091, a touchscreen 4092, an audio circuit 4093, and the like.

The touchscreen 4092 may collect a touch event of a user of the terminal device 400 on or near the touchscreen 4092 (for example, an operation performed by the user on the touchscreen 4092 or near the touchscreen 4092 by using any suitable object such as a finger or a stylus), and sends the collected touch event to another component (for example, the application processor 401). The operation performed by the user near the touchscreen 4092 may be referred to as a floating touch. Through the floating touch, the user may select, move, or drag a target (for example, an icon) without directly touching the touchscreen 4092. In addition, the touchscreen 4092 may be implemented by using a plurality of types such as a resistive type, a capacitive type, an infrared type, and a surface acoustic wave type.

The display (also referred to as a display screen) 4091 is configured to display information input by the user or information displayed to the user. The display may be configured in a form such as a liquid crystal display screen or an organic light-emitting diode. The touchscreen 4092 may cover the display 4091. After detecting a touch event, the touchscreen 4092 transmits the touch event to the application processor 401 to determine a type of the touch event, and then the application processor 401 may provide corresponding visual output on the display 4091 based on the type of the touch event. In FIG. 4, the touchscreen 4092 and the display 4091 are used as two independent components to implement input and output functions of the terminal device 400. However, in some embodiments, the touchscreen 4092 and the display 4091 may be integrated to implement the input and output functions of the terminal device 400. In addition, the touchscreen 4092 and the display 4091 may be disposed on the front of the terminal device 400 in a full panel form, to implement a bezel-less structure.

The audio circuit 4093, a loudspeaker 4094, and a microphone 4095 may provide an audio interface between a user and the terminal device 400. The audio circuit 4093 may convert received audio data into an electrical signal and then transmit a converted electrical signal to the loudspeaker 4094, and the loudspeaker 4094 converts the electrical signal into a sound signal for outputting. In addition, the microphone 4095 converts a collected sound signal into an electrical signal, and the audio circuit 4093 receives the electrical signal, converts the electrical signal into audio data, and then sends the audio data to for example, another terminal device through the modem 404 and the radio frequency module 405, or outputs the audio data to the memory 403 for further processing.

In addition, the terminal device 400 may further have a fingerprint recognition function. For example, a fingerprint collection component may be configured on the back of the terminal device 400 (for example, a lower part of a rear-facing camera), or a fingerprint collection component may be configured on the front of the terminal device 400 (for example, a lower part of the touchscreen 4092). For another example, a fingerprint collection component may be configured in the touchscreen 4092 to implement the fingerprint recognition function. To be specific, the fingerprint collection component may be integrated with the touchscreen 4092 to implement the fingerprint recognition function of the terminal device 400. In this case, the fingerprint collection component is configured in the touchscreen 4092, and may be a part of the touchscreen 4092, or the fingerprint collection component may be configured in the touchscreen 4092 in another manner. A main part of the fingerprint collection component in this embodiment of this application is a fingerprint sensor, and the fingerprint sensor may use any type of sensing technology, including but not limited to an optical, a capacitive, a piezoelectric, or an ultrasonic wave sensing technology.

Further, the operating system 411 carried in the terminal device 400 may be iOS®, Android®, Microsoft®, or another operating system. This is not limited in this embodiment of this application.

The terminal device 400 carrying the Android® operating system is used as an example. The terminal device 400 may be logically divided into a hardware layer, the operating system 411, and an application layer. The hardware layer includes hardware resources such as the application processor 401, the MCU 402, the memory 403, the modem 404, the Wi-Fi module 406, the sensor 408, and the positioning module 410 described above. The application layer includes one or more application programs, for example, the application program 412. The application program 412 may be an application program of any type, for example, a social application, an e-commerce application, or a browser. The operating system 411 is used as software middleware between the hardware layer and the application layer, and is a computer program for managing and controlling hardware and software resources.

In an embodiment, the operating system 411 includes a kernel, a hardware abstraction layer (hardware abstraction layer, HAL), a library and runtime (libraries and runtime), and a framework (framework). The kernel is configured to provide an underlying system component and service, for example, power management, memory management, thread management, and a hardware driver. The hardware driver includes a Wi-Fi driver, a sensor driver, a positioning module driver, and the like. The hardware abstraction layer is encapsulation of a kernel driver, provides an interface for the framework, and shields an underlying implementation detail. The hardware abstraction layer is run in user space, and the kernel driver is run in kernel space.

The library and runtime is also referred to as a runtime library, and provides a library file and an execution environment that are required by an executable program in a runtime. In an embodiment, the library and runtime include Android runtime (Android runtime, ART), a library, and a scenario package runtime. The ART is a virtual machine or a virtual machine instance that can convert bytecode of an application program into machine code. The library is a program library that provides support for the executable program in the runtime, and includes a browser engine (such as a webkit), a script execution engine (such as a JavaScript engine), a graphics processing engine, and the like. The scenario package runtime is a running environment of a scenario package, and mainly includes a page execution environment (page context) and a script execution environment (script context). The page execution environment invokes a corresponding library to parse page code in an html, css, or another format, and the script execution environment invokes a corresponding function library to parse and execute code or an executable file implemented by a script language such as JavaScript.

The framework is configured to provide various basic common components and services for the application program in the application layer, for example, window management and location management. In an embodiment, the framework includes a Geofence service, a policy service, a notification manager, and the like.

All functions of components in the operating system 411 described above may be implemented by the application processor 401 by executing the program stored in the memory 403.

A person skilled in the art may understand that the terminal device 400 may include fewer or more components than those shown in FIG. 4. The terminal device shown in FIG. 4 merely includes components more related to a plurality of implementations disclosed in embodiments of this application.

Based on the foregoing corpus screening framework, this application provides a corpus screening method, to resolve a problem that a related technology needs to greatly depend on manual labeling, and there is no unified standard for randomly selecting corpus data to construct a subset.

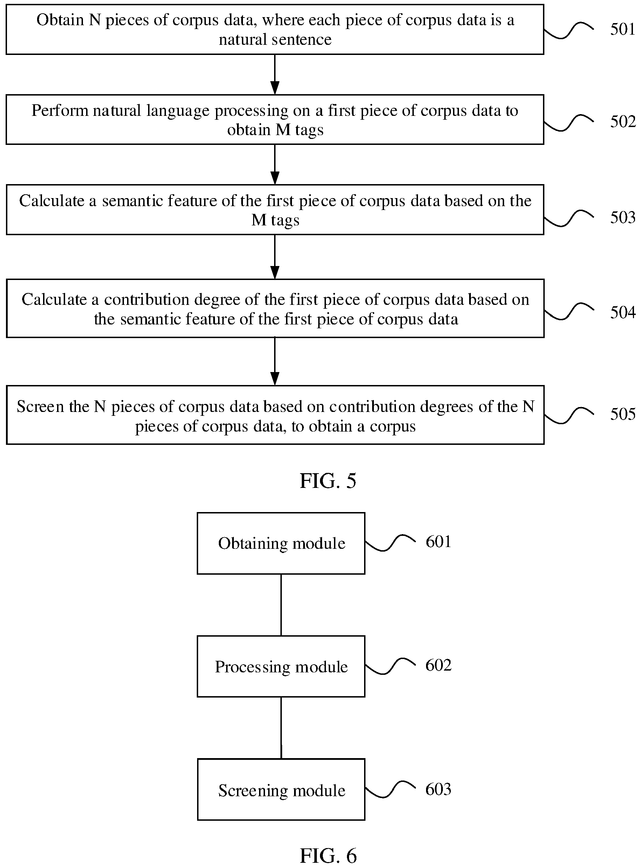

FIG. 5 is a flowchart of an embodiment of a corpus screening method according to this application. As shown in FIG. 5, the method in this embodiment may be performed by the foregoing corpus screening apparatus. The corpus screening method may include the following steps.

Step 501: Obtain N pieces of corpus data, where each piece of corpus data is a natural sentence.

N is a positive integer. The natural sentence is a sentence that ends with a period, an exclamation mark, a question mark, or an ellipsis, and can fully express a meaning. To-be-screened corpus data in this application may be obtained in a plurality of ways, for example, an automatic crawler, namely, a program or a script that automatically captures World Wide Web information according to a specific rule. Alternatively, to-be-screened corpus data in this application may be downloaded from a data platform (including Datatang, Sogou Labs, a natural language processing and information retrieval sharing platform, or Dataju). Alternatively, to-be-screened corpus data in this application may be manually collected. A corpus obtaining method is not specifically limited in this application.

Step 502: Perform natural language processing on a first piece of corpus data to obtain M tags.

M is a positive integer. The first piece of corpus data is any one of the N pieces of corpus data. As described above, the NLP includes one or more of lexical analysis, syntactic parsing, and semantic parsing. This application mainly relates to four technologies: word segmentation and part-of-speech tagging in lexical analysis, dependency syntactic parsing in syntactic parsing, and semantic role labeling in semantic parsing. The four technologies may be considered as preprocessing technologies for corpus screening in this application. The M tags include one or more of a part-of-speech tag (obtained through part-of-speech tagging), a syntactic role tag (obtained through dependency syntactic parsing), and a semantic role label (obtained through semantic role labeling).

The word segmentation technology is configured to segment corpus data to obtain a target word included in the corpus data. Word segmentation is a process of recombining consecutive character sequences (corpus data) into a word sequence according to a specific specification. For example, a piece of corpus data "Help me turn on the air conditioner in the vehicle" is segmented to obtain (help) (me) (turn on) (the vehicle) (in) (the air conditioner), and there are six target words in total.

The part-of-speech tagging technology is configured to tag each target word in the corpus data with a part-of-speech tag. Words in the contemporary Chinese language can be divided into four categories: notional words, functional words, interjections, and onomatopoeia. The notional word (a meaningful word that can independently serve as a component of a sentence, namely, a word that has a lexical meaning and a grammatical meaning) includes an entity word, a predicate, an adjunct word, or a pronoun. The entity word includes a noun, a numeral, or a quantifier. The predicate includes a verb or an adjective. The adjunct word includes a distinguishing word or an adverb. The pronoun is a type of notional word independent of the entity word, the predicate, and the adjunct word, and may be mainly configured to replace a noun, a numeral, a quantifier, a verb, an adjective, and an adverb. Therefore, the pronoun has grammatical functions varying with objects it replaces. The functional word (referred to a word that does not have a complete meaning but has a grammatical meaning or function. It needs to depend on the notional word or a statement to indicate the grammatical meaning. It cannot serve as a separate sentence or a separate grammatical component, and cannot be overlapped) includes a relationship word or a support word. The relationship word includes a conjunction or a preposition. The support word includes an auxiliary word or a modal word. The onomatopoeia and the interjection are special words that are neither the notional words nor the functional words. These two types of words do not have structural relationships with other words in sentences. Word categories are classified according to grammatical functions of words. The part-of-speech refers to a grammatical feature of this type of words, that is, a grammatical function of this type of words. For example, after part-of-speech tags are added to a word segmentation result: (help) (me) (turn on) (the vehicle) (in) (the air conditioner), you can obtain (help [v]) (me [r]) (turn on [v]) (the vehicle [n]) (in [nd]) (the air conditioner [n]).

The dependency syntactic parsing technology is configured to add a syntactic role tag to each target word in the corpus data. The dependency syntax was first proposed by the French linguist L. Tesniere. It analyzes a piece of corpus data into a dependent syntax tree and describes a dependency between target words. It also points out a syntactic collocation between the target words, which is related to semantics. The dependency syntax explains a syntax structure by parsing the dependency between components in the corpus data. It considers a core verb in a sentence to be a central component that dominates other components. The core verb is not dominated by any other component, but all the dominated components belong to a dominator in a specified relationship. The syntactic role tag may mainly include: a subject-verb (subject-verb, SBV) relationship, a verb-object (verb-object, VOB) relationship, an indirect-object (indirect-object, IOB) relationship, a fronting-object (fronting-object, FOB), a double (double, DBL), an attribute (attribute, ATT) relationship, an adverbial (adverbial, ADV) relationship, a complement (complement, CMP) structure, a coordinate (coordinate, COO) relationship, a preposition-object (preposition-object, POB) relationship, a left adjunct (left adjunct, LAD) relationship, a right adjunct (right adjunct, RAD) relationship, an independent structure (IS), and a head (head, HED) relationship. For example, after syntactic role tags are added to a part-of-speech tagging result: (help [v]) (me [r]) (turn on [v]) (the vehicle [n]) (in [nd]) (the air conditioner [n]), you can obtain (help [v] [HED]) (me [r][DBL]) (turn on [v] [VOB]) (the vehicle [n][ATT]) (in [nd] [ATT]). (the air conditioner [n][VOB]).

The semantic role labeling technology is configured to add a semantic role label to a target word in the corpus data. Based on different semantic relationships between predicates (word items that are configured to describe or determine theme properties, features, or relationships between themes, including verbs and adjectives) and variables (semantic components that are directly related to the predicates and dominated by the predicates, usually noun words that serve as subjects or objects in sentences) in a piece of corpus data, the variables can be classified into several types. Semantic role labeling (semantic role labeling, SRL) is shallow semantic parsing. When a sentence is given, a task of the SRL is to find a corresponding semantic role component of a predicate in the sentence, including a core semantic role (for example, an agent or a patient) and an auxiliary semantic role (for example, a place, a time, or a manner). The semantic role label may mainly include: a predicate (REL), an agent (A0), a patient (A1), a range (A2), a start of action (A3), an end of action (A4), other verb-related (A5), an adverbial (ADV), a beneficiary (BNF), a condition (CND), a direction (DIR), annotation (DIS), a degree (DGR), a range (EXT), a frequency (FRQ), a time (TMP), a location (LOC), a manner (MNR), a purpose (PRP), and a subject (TPC). For example, after semantic role labels are added to a syntactic role tagging result: (help [v][HED]) (me [r][DBL]) (turn on [v][VOB]) (the vehicle [n][ATT]) (in [nd][ATT]) (the air conditioner [n][VOB]), you can obtain (help [v][HED]) A1{(me [r][DBL])}EXT {(turn on [v][VOB]) (the vehicle [n][ATT]) (in [nd][ATT]) (the air conditioner [n][VOB])}.

It should be noted that, only one or more of the foregoing four technologies may be executed. For example, part-of-speech tagging is not performed after word segmentation, but dependency syntactic parsing is directly performed. Alternatively, dependency syntactic parsing is first performed after word segmentation, and then part-of-speech tagging is performed. This is not specifically limited in this application. It can withstand 1% drop for three times.

Step 503: Calculate a semantic feature of the first piece of corpus data based on the M tags.

The semantic feature may quantitatively describe a semantic feature of the corpus data. In this application, the semantic feature may include one or more of a predicate quantity feature, a semantic role feature, an intra-semantic-role syntactic role feature, and an intra-semantic-role part-of-speech feature. The following describes a calculation method of each feature.

(1) Predicate quantity feature

Target words tagged as predicates in corpus data constitute a predicate set, the predicate set may be further divided into a plurality of predicate subsets, and each predicate subset corresponds to one target word. For all to-be-screened corpus data, the predicate quantity feature is a percentage of a quantity of target words included in each predicate subset to a quantity of target words included in the predicate set. To be specific, the percentage is a percentage of a target word tagged as a predicate to all target words tagged as predicates. The predicate quantity feature may be calculated by using the following formula:

$$P_{iword}^{pre} = \frac{N_{iword}^{pre}}{N^{pre}}$$

$P_{iword}^{pre}$ represents the percentage, $N_{iword}^{pre}$ represents a quantity of target words that are included in a predicate subset corresponding to an $i^{th}$ target word tagged as a predicate, and $N^{pre}$ represents a quantity of target words included in the predicate set.

For example:

Corpus data 1: He asks Tom to get a coat.
Corpus data 2: This coat has been got.

The target words "asks" and "get" "or "got" in bold in the foregoing two pieces of corpus data are tagged as predicates, so $N^{pre} = 3$ .

"Asks" is a first predicate, and a predicate quantity feature of "asks" may be obtained as $P_{1word}^{pre} = \dfrac{N_{1word}^{pre}}{N^{pre}} = \dfrac{1}{3}$ .

"Get" or "got" are second predicates, and a predicate quantity feature of "get" or "got" may be obtained as

$$P_{2word}^{pre} = \frac{N_{2word}^{pre}}{N^{pre}} = \frac{2}{3} .$$

(2) Semantic role feature

One or more target words within a coverage range of a semantic role label in corpus data constitute a phrase, and one or more phrases may be labeled with a same semantic role label. For all to-be-screened corpus data, the semantic role feature is a percentage of a quantity of semantic role labels to a quantity of all semantic role labels. To be specific, the percentage is a percentage of a quantity of phrases labeled as a semantic role to a quantity of all phrases labeled as semantic roles. The semantic role feature may be calculated by using the following formula:

$$P_i^{arg} = \frac{N_i^{arg}}{N^{arg}}$$

$P_i^{arg}$ represents the foregoing percentage, $N_i^{arg}$ represents a quantity of phrases tagged as an $i^{th}$ semantic role label, and $N^{arg}$ represents a quantity of phrases tagged as all semantic role labels.

For example:

Corpus data: After entering a new century, economic globalization has become a significant and serious challenge for African countries.

After preprocessing: TMP {entering [ATT] a new [ATT] century [VOB] after [ADV], [WP]} A0 {economic [ATT] globalization [SBV]} has become [HED] A1 {A0 {African [ATT] countries [SBV]} for [ATT] [RAD] a [ATT] significant [ATT] and [LAD] serious [COO] [RAD] challenge [VOB]}

The target word "has become" in bold in the foregoing corpus data is tagged as a predicate. Based on labeling after preprocessing, it can be seen that the corpus data is labeled with four semantic role labels (that is, TMP, A0, A1, and A0) in total, so $N^{arg} = 4$.

TMP is a first semantic role label, and there is one TMP in total. A semantic role feature of TMP may be obtained as $P_{TMP}^{arg} = \dfrac{N_{TMP}^{arg}}{N^{arg}} = \dfrac{1}{4}$ .

A0s are second semantic role labels, and there are two A0s in total. A semantic role feature of A0s may be obtained as $P_{A0}^{arg} = \dfrac{N_{A0}^{arg}}{N^{arg}} = \dfrac{2}{4}$ .

A1 is a third semantic role label, and there is one A1 in total. A semantic role feature of A1 may be obtained as $P_{A1}^{arg} = \dfrac{N_{A1}^{arg}}{N^{arg}} = \dfrac{1}{4}$ .

(3) Intra-semantic-role syntactic role feature

One or more target words within a coverage range of a semantic role label in corpus data constitute a phrase, and all target words in the phrase may be tagged with syntactic roles. For each semantic role in each piece of to-be-screened corpus data, the intra-semantic-role syntactic role feature is a percentage of a quantity of target words tagged as a syntactic role within a coverage range of a corresponding semantic role label to a quantity of target words within the coverage area of the semantic role label. To be specific, the percentage is to calculate, in one or more phrases that are labeled with a same semantic role, a percentage of a quantity of syntactic role tags to a quantity of all target words within the coverage area of the semantic role label in each piece of corpus data. The intra-semantic-role syntactic role feature may be calculated by using the following formula:

$$P_{isyn}^{\text{arg}-scope_j} = \frac{N_{isyn}^{\text{arg}-scope_j}}{N^{\text{arg}-scope_j}}$$

$P_{isyn}^{\text{arg}-scope_j}$ represents the foregoing percentage, $N_{isyn}^{\text{arg}-scope_j}$ represents a quantity of target words tagged as an $i^{th}$ syntactic role, and $N^{\text{arg}-scope_j}$ represents a quantity of target words within a coverage area of a $j^{th}$ semantic role label.

For example, corpus data: After entering a new century, economic globalization has become a significant and serious challenge for African countries.

After preprocessing: TMP {entering [ATT] a new [ATT] century [VOB] after [ADV], [WP]} A0 {economic [ATT] globalization [SBV]} has become [HED] A1 {A0 {African [ATT] countries [SBV]} for [ATT] [RAD] a [ATT] significant [ATT] and [LAD] serious [COO] [RAD] challenge [VOB]}

The target word "has become" in bold in the foregoing corpus data is tagged as a predicate. Based on labeling after preprocessing, it can be seen that the corpus data is labeled with four semantic role labels (that is, TMP, A0, A1, and A0) in total.

A phrase corresponding to TMP is {entering [ATT] a new [ATT] century [VOB] after [ADV], [WP]}, and a total of five target words are tagged with syntactic role tags. The following can be obtained:

An intra-semantic-role syntactic role feature of ATT in TMP is $P_{ATTsyn}^{\text{arg-}scope_{TMP}} = \frac{N_{ATTsyn}^{\text{arg-}scope_{TMP}}}{N^{\text{arg-}scope_{TMP}}} = \frac{2}{5}$ .

An intra-semantic-role syntactic role feature of VOB in TMP is $P_{VOBsyn}^{\text{arg-}scope_{TMP}} = \frac{N_{VOBsyn}^{\text{arg-}scope_{TMP}}}{N^{\text{arg-}scope_{TMP}}} = \frac{1}{5}$ .

An intra-semantic-role syntactic role feature of ADV in TMP is $P_{ADVsyn}^{\text{arg-}scope_{TMP}} = \frac{N_{ADVsyn}^{\text{arg-}scope_{TMP}}}{N^{\text{arg-}scope_{TMP}}} = \frac{1}{5}$ .

An intra-semantic-role syntactic role feature of WP in TMP is $P_{WPsyn}^{\text{arg-}scope_{TMP}} = \frac{N_{WPsyn}^{\text{arg-}scope_{TMP}}}{N^{\text{arg-}scope_{TMP}}} = \frac{1}{5}$ .

Phrases corresponding to A0 include {economic [ATT] globalization [SBV]} and {African [ATT] countries [SBV]}, and a total of four target words are tagged with syntactic role tags. The following can be obtained:

An intra-semantic-role syntactic role feature of ATT in A0 is $P_{ATTsyn}^{\text{arg-}scope_{A0}} = \frac{N_{ATTsyn}^{\text{arg-}scope_{A0}}}{N^{\text{arg-}scope_{A0}}} = \frac{2}{4}$ .

An intra-semantic-role syntactic role feature of SBV in A0 is $P_{SBVsyn}^{\text{arg-}scope_{A0}} = \frac{N_{SBVsyn}^{\text{arg-}scope_{A0}}}{N^{\text{arg-}scope_{A0}}} = \frac{2}{4}$ .

A phrase corresponding to A1 is {A0{African [ATT] countries [SBV]} for [ATT] [RAD] a [ATT] significant [ATT] and [LAD] serious [COO] [RAD] challenge [VOB]}, and a total of 10 target words are tagged with syntactic role tags. The following can be obtained:

An intra-semantic-role syntactic role feature of ATT in A1 is $P_{ATTsyn}^{\text{arg-}scope_{A1}} = \frac{N_{ATTsyn}^{\text{arg-}scope_{A1}}}{N^{\text{arg-}scope_{A1}}} = \frac{4}{10}$ .

An intra-semantic-role syntactic role feature of SBV in A1 is $P_{SBVsyn}^{\text{arg-}scope_{A1}} = \frac{N_{SBVsyn}^{\text{arg-}scope_{A1}}}{N^{\text{arg-}scope_{A1}}} = \frac{1}{10}$ .

An intra-semantic-role syntactic role feature of RAD in A1 is
$$P_{RADsyn}^{\text{arg-}scope_{A1}} = \frac{N_{RADsyn}^{\text{arg-}scope_{A1}}}{N^{\text{arg-}scope_{A1}}} = \frac{2}{10}$$ .

An intra-semantic-role syntactic role feature of LAD in A1 is
$$P_{LADsyn}^{\text{arg-}scope_{A1}} = \frac{N_{LADsyn}^{\text{arg-}scope_{A1}}}{N^{\text{arg-}scope_{A1}}} = \frac{1}{10}$$ .

An intra-semantic-role syntactic role feature of COO in A1 is
$$P_{COOsyn}^{\text{arg-}scope_{A1}} = \frac{N_{COOsyn}^{\text{arg-}scope_{A1}}}{N^{\text{arg-}scope_{A1}}} = \frac{1}{10}$$ .

An intra-semantic-role syntactic role feature of VOB in A1 is
$$P_{VOBsyn}^{\text{arg-}scope_{A1}} = \frac{N_{VOBsyn}^{\text{arg-}scope_{A1}}}{N^{\text{arg-}scope_{A1}}} = \frac{1}{10}$$ .

(4) Intra-semantic-role part-of-speech feature

One or more target words within a coverage range of a semantic role label in corpus data constitute a phrase, and all target words in the phrase have parts-of-speech. For each semantic role in each piece of to-be-screened corpus data, the intra-semantic-role part-of-speech feature is a percentage of a quantity of target words tagged as a part-of-speech within a coverage range of a corresponding semantic role label to a quantity of target words within the coverage area of the semantic role label. To be specific, the percentage is to calculate, in one or more phrases that are labeled with a same semantic role, a percentage of a quantity of part-of-speech role tags to a quantity of all target words within the coverage area of the semantic role label in each piece of corpus data. The intra-semantic-role part-of-speech feature may be calculated by using the following formula:

$$P_{ipos}^{\text{arg-}scope_j} = \frac{N_{ipos}^{\text{arg-}scope_j}}{N^{\text{arg-}scope_j}}$$

$P_{ipos}^{\text{arg-}scope_j}$ represents the foregoing percentage, $N_{ipos}^{\text{arg-}scope_j}$ represents a quantity of target words tagged as an ith part-of-speech, and $N^{\text{arg-}scope_j}$ represents a quantity of target words within a coverage area of a jth semantic role label.

For example, corpus data: After entering a new century, economic globalization has become a significant and serious challenge for African countries.

After preprocessing: TMP {entering [v] a new [a] century [n] after [nd], [wp]} A0 {economic [n] globalization [v]} has become [v] A1 {A0 {African [ns] countries [n]} for [v] [u] a [m] significant[a] and [c] serious [a] [u] challenge [v]}.

The target word "has become" in bold in the foregoing corpus data is tagged as a predicate. Based on labeling after preprocessing, it can be seen that the corpus data is labeled with four semantic role labels (that is, TMP, A0, A1, and A0) in total.

A phrase corresponding to TMP is {entering [v] a new [a]century [n]after [nd], [wp]}, and a total of five target words are tagged with part-of-speech tags. The following can be obtained:

An intra-semantic-role part-of-speech feature of v in TMP is
$$P_{vpos}^{\text{arg-}scope_{TMP}} = \frac{N_{vpos}^{\text{arg-}scope_{TMP}}}{N^{\text{arg-}scope_{TMP}}} = \frac{1}{5}$$ .

An intra-semantic-role part-of-speech feature of a in TMP is
$$P_{apos}^{\text{arg-}scope_{TMP}} = \frac{N_{apos}^{\text{arg-}scope_{TMP}}}{N^{\text{arg-}scope_{TMP}}} = \frac{1}{5}$$ .

An intra-semantic-role part-of-speech feature of n in TMP is
$$P_{npos}^{\text{arg-}scope_{TMP}} = \frac{N_{npos}^{\text{arg-}scope_{TMP}}}{N^{\text{arg-}scope_{TMP}}} = \frac{1}{5}$$ .

An intra-semantic-role part-of-speech feature of nd in TMP is
$$P_{ndpos}^{\text{arg-}scope_{TMP}} = \frac{N_{ndpos}^{\text{arg-}scope_{TMP}}}{N^{\text{arg-}scope_{TMP}}} = \frac{1}{5}$$ .

An intra-semantic-role part-of-speech feature of wp in TMP is
$$P_{wppos}^{\text{arg-}scope_{TMP}} = \frac{N_{wppos}^{\text{arg-}scope_{TMP}}}{N^{\text{arg-}scope_{TMP}}} = \frac{1}{5}$$ .

Phrases corresponding to A0 include {economic [n] globalization [v]} and {African [ns] countries [n]}, and a total of four target words are tagged with part-of-speech tags. The following can be obtained:

An intra-semantic-role part-of-speech feature of n in A0 is
$$P_{npos}^{\text{arg-}scope_{A0}} = \frac{N_{npos}^{\text{arg-}scope_{A0}}}{N^{\text{arg-}scope_{A0}}} = \frac{2}{4}$$
.

An intra-semantic-role part-of-speech feature of v in A0 is
$$P_{vpos}^{\text{arg-}scope_{A0}} = \frac{N_{vpos}^{\text{arg-}scope_{A0}}}{N^{\text{arg-}scope_{A0}}} = \frac{1}{4}$$
.

An intra-semantic-role part-of-speech feature of ns in A0 is
$$P_{nspos}^{\text{arg-}scope_{A0}} = \frac{N_{nspos}^{\text{arg-}scope_{A0}}}{N^{\text{arg-}scope_{A0}}} = \frac{1}{4}$$
.

A phrase corresponding to A1 is {A0{African [ns] countries [n]} for [v] [u] a [m] significant [a] and [c] serious [a] [u] challenge [v]}, and a total of 10 target words are tagged with part-of-speech tags. The following can be obtained:

An intra-semantic-role part-of-speech feature of ns in A1 is
$$P_{nspos}^{\text{arg-}scope_{A1}} = \frac{N_{nspos}^{\text{arg-}scope_{A1}}}{N^{\text{arg-}scope_{A1}}} = \frac{1}{10}$$
.

An intra-semantic-role part-of-speech feature of n in A1 is
$$P_{npos}^{\text{arg-}scope_{A1}} = \frac{N_{npos}^{\text{arg-}scope_{A1}}}{N^{\text{arg-}scope_{A1}}} = \frac{1}{10}$$
.

An intra-semantic-role part-of-speech feature of v in A1 is
$$P_{vpos}^{\text{arg-}scope_{A1}} = \frac{N_{vpos}^{\text{arg-}scope_{A1}}}{N^{\text{arg-}scope_{A1}}} = \frac{2}{10}$$
.

An intra-semantic-role part-of-speech feature of u in A1 is
$$P_{upos}^{\text{arg-}scope_{A1}} = \frac{N_{upos}^{\text{arg-}scope_{A1}}}{N^{\text{arg-}scope_{A1}}} = \frac{2}{10}$$
.

An intra-semantic-role part-of-speech feature of m in A1 is
$$P_{mpos}^{\text{arg-}scope_{A1}} = \frac{N_{mpos}^{\text{arg-}scope_{A1}}}{N^{\text{arg-}scope_{A1}}} = \frac{1}{10}$$
.

An intra-semantic-role part-of-speech feature of a in A1 is
$$P_{apos}^{\text{arg-}scope_{A1}} = \frac{N_{apos}^{\text{arg-}scope_{A1}}}{N^{\text{arg-}scope_{A1}}} = \frac{2}{10}$$
.

An intra-semantic-role part-of-speech feature of c in A1 is
$$P_{cpos}^{\text{arg-}scope_{A1}} = \frac{N_{cpos}^{\text{arg-}scope_{A1}}}{N^{\text{arg-}scope_{A1}}} = \frac{1}{10}$$
.

It should be noted that, in this application, one or more of the predicate quantity feature, the semantic role feature, the intra-semantic-role syntactic role feature, and the intra-semantic-role part-of-speech feature may be calculated based on an actual requirement. In other words, all or only some of the four semantic features may be calculated. This is not specifically limited. Further, in addition to the foregoing four features, the semantic feature in this application may further include another feature, and may be used for calculation in this application provided that another feature is required for subsequent calculation of a contribution degree and/or a corpus screening policy. This is not specifically limited in this application either.

step 504: Calculate a contribution degree of the first piece of corpus data based on the semantic feature of the first piece of corpus data.

In this application, based on the one or more semantic features obtained through calculation in step 503, a contribution degree of a target word level (a corresponding syntactic role tag) may be first calculated, then a contribution degree of a phrase level (a corresponding semantic role label) is calculated, and finally a contribution degree of the entire corpus data is calculated. The following describes a method for calculating the contribution degree.

First, a syntactic role contribution degree is defined (through which, for each semantic role label, a contribution degree of each syntactic role within a coverage area of the semantic role label is calculated after a syntactic role tag and a semantic role label are added to the corpus data). For each semantic role in each piece of to-be-screened corpus data, an average syntactic role contribution degree of each syntactic role included in the corresponding corpus data may be calculated by using the following formula:

$$P_x^{arc\text{-}scope_z} = \frac{\sum_1^n P_{xsyn}^{\text{arg-}scope_z} \times P_{ypos}^{\text{arg-}scope_z}}{n}$$

$P_x^{arc\text{-}scope_z}$ represents an $x^{th}$ syntactic role contribution degree within a coverage area of a $z^{th}$ semantic role label in corpus data, n represents a quantity of target words tagged as an $x^{th}$ syntactic role within the coverage area of the $z^{th}$ semantic role label, $P_{xsyn}^{\text{arg-}scope_z}$ is an $x^{th}$ syntactic role feature in a $z^{th}$ semantic role obtained through calculation in step 503, and $P_{ypos}^{\text{arg-}scope_z}$ is a $y^{th}$ part-of-speech feature, obtained through calculation in step 503, tagged as the $x^{th}$ syntactic role in the $z^{th}$ semantic role.

A semantic role contribution degree is further defined based on the syntactic role contribution degree (through which, for each semantic role label, a contribution degree of the semantic role is calculated based on contribution degrees of various syntactic roles within a coverage range of the semantic role label). For each piece of to-be-screened corpus data, an average semantic role contribution degree of each semantic role included in the corresponding corpus data may be calculated by using the following formula:

$$P_z^{\text{arg-}scope_k} = \frac{\sum_1^m P_x^{arc\text{-}scope_z}}{m}$$

$P_z^{\text{arg-}scope_k}$ represents a $z^{th}$ semantic role contribution degree in a $k^{th}$ piece of corpus data, and m represents a quantity of syntactic role tags within a coverage area of the $z^{th}$ semantic role label in the $k^{th}$ piece of corpus data.

A semantic contribution degree is defined based on the semantic role contribution degree (through which, for each piece of corpus data, a contribution degree of the corpus data is calculated based on a contribution degree of a semantic role included in the corpus data). For each piece of to-be-screened corpus data, a semantic contribution degree of the corresponding corpus data may be calculated by using the following formula:

$$con_k^{sentence} = \frac{\sum_1^t P_z^{\text{arg-}scope_k}}{t}$$

$con_k^{sentence}$ represents a semantic contribution degree of the $k^{th}$ piece of corpus data, and t represents a quantity of semantic role labels in the $k^{th}$ piece of corpus data.

For example, corpus data: After entering a new century, economic globalization has become a significant and serious challenge for African countries.

After preprocessing: TMP {entering [v][ATT] a new [a][ATT] century [n][VOB] after [nd][ADV], [wp][WP]} A0 {economic [n][ATT] globalization [v][SBV]} has become [v][HED] A1 {A0{African [ns][ATT] countries [n] [SBV] } for [u][RAD] [v] [ATT] a [m] [ATT] significant [a] [ATT] and[c] [LAD] serious [a] [COO] [u][RAD] challenge [v][VOB]}

The target word "has become" in bold in the foregoing corpus data is tagged as a predicate. Based on labeling after preprocessing, it can be seen that the corpus data is labeled with four semantic role labels (that is, TMP, A0, A1, and A0) in total.

A phrase corresponding to TMP is {entering [v][ATT] a new [a][ATT] century [n][VOB] after [nd][ADV], [wp][WP]}, and a total of five target words are tagged with part-of-speech tags and syntactic role tags. The following can be obtained:

A syntactic role contribution degree of ATT in TMP is

$$P_{ATT}^{arc\text{-}scope_{TMP}} = \frac{P_{ATTsyn}^{\text{arg-}scope_{TMP}} \times P_{vpos}^{\text{arg-}scope_{TMP}} + P_{ATTsyn}^{\text{arg-}scope_{TMP}} \times P_{apos}^{\text{arg-}scope_{TMP}}}{n}$$

$$= \frac{\frac{2}{5} \times \frac{1}{5} + \frac{2}{5} \times \frac{1}{5}}{2} \qquad .$$

$$= \frac{2}{25}$$

A syntactic role contribution degree of VOB in TMP is

$$P_{VOB}^{arc\text{-}scope_{TMP}} = \frac{P_{VOBsyn}^{\text{arg-}scope_{TMP}} \times P_{npos}^{\text{arg-}scope_{TMP}}}{n}$$

$$= \frac{\frac{1}{5} \times \frac{1}{5}}{1} \qquad .$$

$$= \frac{1}{25}$$

A syntactic role contribution degree of ADV in TMP is

$$P_{ADV}^{arc\text{-}scope_{TMP}} = \frac{P_{ADVsyn}^{\text{arg-}scope_{TMP}} \times P_{ndpos}^{\text{arg-}scope_{TMP}}}{n}$$

$$= \frac{\frac{1}{5} \times \frac{1}{5}}{1} \qquad .$$

$$= \frac{1}{25}$$

A syntactic role contribution degree of WP in TMP is

$$P_{WP}^{arc\text{-}scope_{TMP}} = \frac{P_{WPsyn}^{\text{arg-}scope_{TMP}} \times P_{wppos}^{\text{arg-}scope_{TMP}}}{n}$$

$$= \frac{\frac{1}{5} \times \frac{1}{5}}{1} \qquad .$$

$$= \frac{1}{25}$$

Phrases corresponding to A0 include {economic [n][ATT] globalization [v][SBV]} and {African [ns] [ATT] countries [n] [SBV] }, and a total of four target words are tagged with part-of-speech tags and syntactic role tags. The following can be obtained:

A syntactic role contribution degree of ATT in A0 is

$$P_{ATT}^{arc\text{-}scope_{A0}} = \frac{P_{ATTsyn}^{\text{arg-}scope_{A0}} \times P_{npos}^{\text{arg-}scope_{A0}} + P_{ATTsyn}^{\text{arg-}scope_{A0}} \times P_{nspos}^{\text{arg-}scope_{A0}}}{n}$$

$$= \frac{\dfrac{2}{4} \times \dfrac{2}{4} + \dfrac{2}{4} \times \dfrac{1}{4}}{2}$$

$$= \frac{3}{16}$$

A syntactic role contribution degree of SBV in A0 is

$$P_{SBV}^{arc\text{-}scope_{A0}} = \frac{P_{SBVsyn}^{\text{arg-}scope_{A0}} \times P_{vpos}^{\text{arg-}scope_{A0}} + P_{SBVsyn}^{\text{arg-}scope_{A0}} \times P_{npos}^{\text{arg-}scope_{A0}}}{n}$$

$$= \frac{\dfrac{2}{4} \times \dfrac{1}{4} + \dfrac{2}{4} \times \dfrac{2}{4}}{2}$$

$$= \frac{3}{16}$$

A phrase corresponding to A1 is {A0{African [ns][ATT] countries [n][SBV]} for [v][ATT] [u][RAD] a [m][ATT] significant [a][ATT] and [c][LAD] serious [a] [COO] [u][RAD] challenge [v][VOB]}, and a total of 10 target words are tagged with part-of-speech tags and syntactic role tags. The following can be obtained:

A syntactic role contribution degree of ATT in A1 is

$$P_{ATT}^{arc\text{-}scope_{A1}} = \frac{P_{ATTsyn}^{\text{arg-}scope_{A1}} \times P_{nspos}^{\text{arg-}scope_{A1}} + P_{ATTsyn}^{\text{arg-}scope_{A1}} \times P_{vpos}^{\text{arg-}scope_{A1}} + P_{ATTsyn}^{\text{arg-}scope_{A1}} \times P_{mpos}^{\text{arg-}scope_{A1}} + P_{ATTsyn}^{\text{arg-}scope_{A1}} \times P_{apos}^{\text{arg-}scope_{A1}}}{n}$$

$$= \frac{\dfrac{4}{10} \times \dfrac{1}{10} + \dfrac{4}{10} \times \dfrac{2}{10} + \dfrac{4}{10} \times \dfrac{1}{10} + \dfrac{4}{10} \times \dfrac{2}{10}}{4}$$

$$= \frac{6}{100}$$

A syntactic role contribution degree of SBV in A1 is

$$P_{SBV}^{arc\text{-}scope_{A1}} = \frac{P_{SBVsyn}^{\text{arg-}scope_{A1}} \times P_{npos}^{\text{arg-}scope_{A1}}}{n}$$

$$= \frac{\dfrac{1}{10} \times \dfrac{1}{10}}{1}$$

$$= \frac{1}{100}$$

A syntactic role contribution degree of RAD in A1 is

$$P_{RAD}^{arc\text{-}scope_{A1}} = \frac{P_{RADsyn}^{\text{arg-}scope_{A1}} \times P_{upos}^{\text{arg-}scope_{A1}} + P_{RADsyn}^{\text{arg-}scope_{A1}} \times P_{upos}^{\text{arg-}scope_{A1}}}{n}$$

$$= \frac{\dfrac{2}{10} \times \dfrac{2}{10} + \dfrac{2}{10} \times \dfrac{2}{10}}{2} \quad .$$

$$= \frac{4}{100}$$

A syntactic role contribution degree of LAD in A1 is

$$P_{LAD}^{arc\text{-}scope_{A1}} = \frac{P_{LADsyn}^{\text{arg-}scope_{A1}} \times P_{cpos}^{\text{arg-}scope_{A1}}}{n}$$

$$= \frac{\dfrac{1}{10} \times \dfrac{1}{10}}{1} \quad .$$

$$= \frac{1}{100}$$

A syntactic role contribution degree of COO in A1 is

$$P_{COO}^{arc\text{-}scope_{A1}} = \frac{P_{COOsyn}^{\text{arg-}scope_{A1}} \times P_{apos}^{\text{arg-}scope_{A1}}}{n}$$

$$= \frac{\dfrac{1}{10} \times \dfrac{2}{10}}{1} \quad .$$

$$= \frac{2}{100}$$

A syntactic role contribution degree of VOB in A1 is

$$P_{VOB}^{arc\text{-}scope_{A1}} = \frac{P_{VOBsyn}^{\text{arg-}scope_{A1}} \times P_{vpos}^{\text{arg-}scope_{A1}}}{n}$$

$$= \frac{\dfrac{1}{10} \times \dfrac{2}{10}}{1} \quad .$$

$$= \frac{2}{100}$$

Based on the foregoing syntactic role contribution degree, the following may be obtained:

A semantic role contribution degree of TMP is

$$P_{TMP}^{\text{arg-}scope_k} = \frac{P_{ATT}^{arc\text{-}scope_{TMP}} + P_{VOB}^{arc\text{-}scope_{TMP}} + P_{ADV}^{arc\text{-}scope_{TMP}} + P_{WP}^{arc\text{-}scope_{TMP}}}{m}$$

$$= \frac{\dfrac{2}{25} + \dfrac{1}{25} + \dfrac{1}{25} + \dfrac{1}{25}}{4}$$

$$= \frac{5}{100}$$

A semantic role contribution degree of A0 is

$$P_{A0}^{\text{arg-}scope_k} = \frac{P_{ATT}^{arc\text{-}scope_{A0}} + P_{SBV}^{arc\text{-}scope_{A0}}}{m}$$

$$= \frac{\dfrac{3}{16} + \dfrac{3}{16}}{2}$$

$$= \frac{3}{16}$$

A semantic role contribution degree of A1 is

$$P_{A1}^{\text{arg-}scope_k} = \frac{P_{ATT}^{arc\text{-}scope_{A1}} + P_{SBV}^{arc\text{-}scope_{A1}} + P_{RAD}^{arc\text{-}scope_{A1}} + P_{LAD}^{arc\text{-}scope_{A1}} + P_{COO}^{arc\text{-}scope_{A1}} + P_{VOB}^{arc\text{-}scope_{A1}}}{m}$$

$$= \frac{\dfrac{6}{100} + \dfrac{1}{100} + \dfrac{4}{100} + \dfrac{1}{100} + \dfrac{2}{100} + \dfrac{2}{100}}{6}$$

$$= \frac{8}{300}$$

Based on the foregoing semantic role contribution degree, the following may be obtained:
A semantic contribution degree of the corpus data in the example is:

$$con_k^{sentence} = \frac{P_{TMP}^{\text{arg-}scope_k} + P_{A0}^{\text{arg-}scope_k} + P_{A1}^{\text{arg-}scope_k}}{t}$$

$$= \frac{\dfrac{5}{100} + \dfrac{3}{16} + \dfrac{8}{300}}{3}$$

$$= 0.2375$$

Optionally, in this application, a global predicate contribution degree in all corpus data may be further defined based on the foregoing semantic contribution degree. The global predicate contribution degree may be calculated by using the following formula:

$$con_{iword}^{pre} = P_{iword}^{pre} \times \frac{\sum_{k=1}^{u} con_k^{sentence}}{u}$$

$con_{iword}^{pre}$ represents a global predicate contribution degree of the ith target word tagged as the predicate in all corpus data, u represents a quantity of all corpus data, and $P_{iword}^{pre}$ is a predicate quantity feature that is of the ith target word tagged as the predicate and that is obtained through calculation in step 503.

Optionally, in this application, a global semantic role contribution degree in all corpus data may be further defined based on the foregoing semantic contribution degree. The global semantic role contribution degree may be calculated by using the following formula:

$$con_i^{arg} = P_i^{arg} \times \frac{\sum_{k=1}^{u} con_k^{sentence}}{u}$$

$con_i^{arg}$ represents a global semantic role contribution degree of an ith semantic role in all corpus data, u represents a quantity of all corpus data, and $P_i^{arg}$ is a semantic role feature that is of the ith semantic role and that is obtained through calculation in step 503.

Step 505: Screen the N pieces of corpus data based on the contribution degrees of the N pieces of corpus data, to obtain a corpus.

In this application, the N to-be-screened pieces of corpus data may be sorted in descending order of the semantic contribution degrees obtained through calculation in step 504, and the first n pieces of corpus data are selected to constitute the corpus, where n is a preset value, and may be set based on a purpose, a size, and the like of the corpus. This is not specifically limited in this application.

Optionally, in this application, based on use frequency of target words tagged as a predicate in the N to-be-screened pieces of corpus data, weights may be set for the target words. Then, for each target word tagged as the predicate, all corpus data including the corresponding target word are sorted in descending order of semantic contribution degrees. Finally, based on the weight of the corresponding target word, a related quantity of corpus data with weights ranking top are selected from all corpus data corresponding to the target word, and the corpus data is added to the corpus.

Optionally, in this application, based on use frequency of the phrases labeled with a semantic role in the N to-be-screened pieces of corpus data, weights may be set for the phrases. Then, for each phrase labeled with the semantic role, all corpus data including the corresponding phrase are sorted in descending order of semantic contribution degrees. Finally, based on the weight of the corresponding phrase, a related quantity of corpus data with weights ranking top are selected from all corpus data corresponding to the phrase, and the corpus data is added to the corpus.

Optionally, in this application, the global predicate contribution degrees that are of each target word tagged as a predicate, that are in all the corpus data, and that are obtained through calculation in step 504 may be configured to sort all the corpus data including the corresponding target word in descending order of the global predicate contribution degrees, and the first n pieces of corpus data are selected to constitute the corpus.

Optionally, in this application, the global semantic role contribution degrees that are of each semantic role, that are in all the corpus data, and that are obtained through calculation in step 504 may be configured to sort all the corpus data including the corresponding semantic role label in descending order of the global semantic role contribution degrees, and the first n pieces of corpus data are selected to constitute the corpus.

In addition to the foregoing policy, in this application, the corpus data may be screened by combining another semantic feature combination. This is not specifically limited in this application.

In the corpus screening method in this application, a screening solution is provided from a semantic perspective of the corpus data, so that the corpus can express a large amount of universal set information. Therefore, a better effect can be achieved by tagging the corpus data in the corpus and then inputting the corpus data into a model for training. 15517 pieces of training data are screened from a corpus including 51723 pieces of training data in a ratio of 0.3 as a training set. As shown in Table 1, in each sub-domain, a row whose sequence number is 0 represents random screening, a row whose sequence number is 1 represents that the corpus screening method in this application is used, and a row whose sequence number is 2 represents that no corpus data is screened and all corpus data is used. The screened corpus data is applied to a natural language understanding model and tested on a test set. It is found that a model trained through the corpus obtained by the corpus screening method in this application is much better than a random screening training model, and may implement a result close to that of a universal set training model. Table 2 shows semantic contribution degrees respectively obtained by using a random screening method, the corpus screening method in this application, and a non-screening method.

Table 1

| Domain | | Telephone communication | Device control | | | Driving control | | Environment adjustment | | Music | | Navigation | System operation | User personal data | | Others |
|---|---|---|---|---|---|---|---|---|---|---|---|---|---|---|---|---|
| Sub-domain | Sequence number | Communication service | Seat control | Vehicle door control | Vehicle window control | Driving assistance settings | Driving mode settings | Air conditioner control | Environment service | Music service | Music settings | Navigation service | System settings | User command | User Experience | Out-of-domain |
| domain_acc | 0 | 98.95 | 100 | 100 | 100 | 97.96 | 100 | 100 | 100 | 88.93 | 40 | 97.65 | 100 | 100 | 86.67 | 86.03 |
| | 1 | 99.28 | 99.28 | 100 | 100 | 100 | 100 | 100 | 100 | 88.06 | 40 | 98.45 | 100 | 100 | 86.67 | 92.47 |
| | 2 | 98.23 | 98.23 | 100 | 100 | 100 | 100 | 100 | 100 | 89.39 | 40 | 98.45 | 100 | 100 | 93.33 | 83.29 |
| intent_acc | 0 | 95.03 | 91.18 | 89.74 | 100 | 100 | 100 | 100 | 100 | 86.04 | 40 | 98.45 | 100 | 100 | 93.33 | 89.45 |
| | 1 | 95.16 | 97.06 | 92.31 | 100 | 100 | 100 | 100 | 100 | 85.51 | 40 | 96.47 | 66.67 | 100 | 80 | 94.38 |
| | 2 | 95.62 | 100 | 100 | 100 | 100 | 100 | 100 | 100 | 85.83 | 40 | 97.19 | 100 | 100 | 93.33 | 85.75 |
| slot_p | 0 | 76.49 | 30.77 | 60.47 | 91.23 | 93.02 | 25 | 90.62 | 98.73 | 71.65 | 25 | 80.82 | 22.58 | 84.34 | 78.95 | 0 |
| | 1 | 80.71 | 35.29 | 100 | 98.04 | 95.74 | 100 | 93.62 | 100 | 75.5 | 12.5 | 87.03 | 20 | 93.24 | 73.68 | 0 |
| | 2 | 76.26 | 92.31 | 97.3 | 98.11 | 100 | 100 | 96.81 | 98.73 | 79.77 | 50 | 93.69 | 50 | 97.22 | 62.5 | 0 |
| slot_r | 0 | 84.52 | 35.29 | 33.33 | 100 | 81.63 | 25 | 92.55 | 100 | 62.47 | 22.22 | 80.09 | 100 | 100 | 71.43 | 0 |
| | 1 | 83.56 | 35.29 | 100 | 96.15 | 91.84 | 100 | 93.62 | 100 | 63.35 | 16.67 | 87.97 | 100 | 98.57 | 66.67 | 0 |
| | 2 | 82.68 | 100 | 92.31 | 100 | 100 | 100 | 96.81 | 100 | 68.91 | 11.11 | 93.99 | 100 | 100 | 95.24 | 0 |
| slot_f | 0 | 80.3 | 32.88 | 42.98 | 95.41 | 89.96 | 25 | 91.58 | 99.36 | 66.75 | 23.53 | 80.46 | 36.84 | 91.5 | 75 | 0 |
| | 1 | 82.11 | 35.29 | 100 | 97.09 | 93.75 | 100 | 93.62 | 100 | 68.9 | 14.29 | 87.5 | 33.33 | 95.83 | 70 | 0 |
| | 2 | 79.34 | 96 | 94.74 | 99.05 | 100 | 100 | 96.81 | 99.36 | 73.94 | 18.18 | 93.84 | 66.67 | 98.59 | 75.74 | 0 |
| command_acc | 0 | 81.74 | 29.41 | 28.21 | 100 | 81.63 | 25 | 78.95 | 100 | 58.76 | 0 | 76.42 | 66.67 | 100 | 60 | 81.23 |
| | 1 | 81.48 | 35.29 | 92.31 | 92.86 | 91.84 | 100 | 84.21 | 100 | 60.2 | 0 | 86.24 | 66.67 | 98.57 | 40 | 92.05 |
| | 2 | 80.82 | 100 | 92.31 | 100 | 100 | 100 | 92.11 | 100 | 66.38 | 0 | 93.05 | 100 | 100 | 93.33 | 77.4 |

**Table 2**

|  | domain_acc | intent_acc | slot_f1 | command_acc |
|---|---|---|---|---|
| Random screening in a ratio of 0.3 | 0.9328 | 0.9019 | 0.7384 | 0.6964 |
| Apply the screening model in a ratio of 0.3. | 0.9365 | 0.9139 | 0.7812 | 0.7466 |
| Universal set | 0.9347 | 0.9123 | 0.8009 | 0.7638 |

According to the corpus screening method in this application, one or more tags of the corpus data are obtained by using an NLP technology, a semantic contribution degree of each piece of to-be-screened corpus data is calculated based on the tags, and then the corpus data is screened based on the semantic contribution degree, to obtain the corpus. The corpus covers a large amount of universal set information in terms of syntax and semantics, and a unified standard is provided for corpus screening. This not only can help an annotator screen a subset from a huge corpus, but also can improve efficiency and reduce costs, thereby facilitating efficient creation and iteration of the supervised learning model.

FIG. 6 is a schematic diagram of a structure of an embodiment of a corpus screening apparatus according to this application. As shown in FIG. 6, the apparatus in this embodiment may include an obtaining module 601, a processing module 602, and a screening module 603. The obtaining module 601 is configured to obtain N pieces of corpus data, where each piece of corpus data is a natural sentence, and N is a positive integer. The processing module 602 is configured to: perform natural language processing on a first piece of corpus data to obtain M tags, where the first piece of corpus data is any one of the N pieces of corpus data, the natural language processing includes one or more of lexical analysis, syntactic parsing, and semantic parsing, the M tags include one or more of a part-of-speech tag, a syntactic role tag, and a semantic role label, and M is a positive integer; calculate a semantic feature of the first piece of corpus data based on the M tags, where the semantic feature is configured to indicate a text semantic feature of the first piece of corpus data; and calculate a contribution degree of the first piece of corpus data based on the semantic feature of the first piece of corpus data, where the contribution degree of the first piece of corpus data is configured to indicate a semantic weight of the first piece of corpus data in the N pieces of corpus data. The screening module 603 is configured to screen the N pieces of corpus data based on contribution degrees of the N pieces of corpus data, to obtain a corpus.

In a possible implementation, the processing module 602 is further configured to: perform word segmentation processing on the first piece of corpus data to obtain K target words; perform part-of-speech tagging on the K target words to obtain K part-of-speech tags, where each target word corresponds to one part-of-speech tag; perform dependency syntactic parsing on the K target words to obtain K syntactic role tags, where each target word corresponds to one syntactic role tag; and perform semantic role labeling on the K target words to obtain L semantic role labels, where each semantic role label corresponds to one phrase, the phrase includes one or more of the target words, and L is a positive integer.

In a possible implementation, the semantic feature includes an intra-semantic-role syntactic role feature and an intra-semantic-role part-of-speech feature that are of the first piece of corpus data. The processing module 602 is specifically configured to: calculate the intra-semantic-role syntactic role feature based on the K syntactic role tags and the L semantic role labels; and calculate the intra-semantic-role part-of-speech feature based on the K part-of-speech tags and the L semantic role labels.

In a possible implementation, the processing module 602 is specifically configured to: calculate a contribution degree of a first target word based on the intra-semantic-role syntactic role feature and the intra-semantic-role part-of-speech feature, where the first target word is a target word that is in the K target words and that corresponds to a first syntactic role tag, and the first syntactic role tag is any one of the K syntactic role tags; calculate a contribution degree of a first phrase based on the contribution degree of the first target word, where the first phrase includes the first target word and is a phrase that is in the first piece of corpus data and that corresponds to a first semantic role label, and the first semantic role label is one of the L semantic role labels; and calculate a contribution degree of the first piece of corpus data based on the contribution degree of the first phrase.

In a possible implementation, the screening module 603 is specifically configured to sort, in descending order of contribution degrees, the N pieces of corpus data, and select first n pieces of corpus data to constitute the corpus, where n is a preset value.

In a possible implementation, the screening module 603 is specifically configured to: obtain weights of all second target words, where the second target word is a target word that is in the N pieces of corpus data and that is tagged as a specified predicate; for each second target word, sort, in descending order of contribution degrees, all second pieces of corpus data that includes the second target word, where the N pieces of corpus data include all the second pieces of corpus data; and extract, based on the weight of the second target word, a related quantity of the second pieces of corpus data from all the second pieces of corpus data that includes the second target word, and add the second pieces of corpus data to the corpus.

In a possible implementation, the screening module 603 is specifically configured to: obtain weights of all second phrases, where the second phrase is a phrase that is in the N pieces of corpus data and that is labeled as a specified semantic role label; for each second phrase, sort, in descending order of contribution degrees, all third pieces of corpus data that includes the second phrase, where the N pieces of corpus data include all the third pieces of corpus data; and extract, based on the weight of the second phrase, a related quantity of the third pieces of corpus data from all the third pieces of corpus data that includes the second phrase, and add the third pieces of corpus data to the corpus.

In a possible implementation, the processing module 602 is specifically configured to: calculate, as the intra-semantic-role syntactic role feature, a first percentage of a quantity of target words included in a first target word set to a quantity of target words included in a second target word set, where the second target word set includes all target words in a phrase that is in the first piece of corpus data and that corresponds to a second semantic role label, the second semantic role label is any one of the L semantic role labels, the first target word set includes all target words that are in the second target word set and that correspond to a first syntactic role tag, and the first syntactic role tag is any one of syntactic role tags respectively corresponding to all target words in the second target word set.

In a possible implementation, the processing module 602 is specifically configured to: calculate, as the intra-semantic-role part-of-speech feature, a second percentage of a quantity of target words included in a third target word set to a quantity of target words included in a second target word set, where the second target word set includes all target words in a phrase that is in the first piece of corpus data and that corresponds to a second semantic role label, the second semantic role label is any one of the L semantic role labels, the third target word set includes all target words that are in the second target word set and that correspond to a first part-of-speech tag, and the first part-of-speech tag is any one of part-of-speech tags respectively corresponding to all target words in the second target word set.

In a possible implementation, the semantic feature further includes a predicate quantity feature. The processing module 602 is further configured to: calculate, as the predicate quantity feature, a third percentage of a quantity of target words included in a fourth target word set to a quantity of target words included in a fifth target word set, where the fourth target word set includes all target words that are in the N pieces of corpus data and that are tagged as a first predicate, the fifth target word set includes all target words that are in the N pieces of corpus data and that are tagged as any predicate, and the first predicate is any one of the predicates; and calculate, based on the predicate quantity feature and the contribution degrees of the N pieces of corpus data, contribution degrees of all target words that are in the N pieces of corpus data and that are tagged as any predicate. The screening module 603 is further configured to sort, in descending order of contribution degrees, all target words that are in the N pieces of corpus data and that are tagged as any predicate, and select corpus data that includes the first n target words to constitute the corpus.

In a possible implementation, the semantic feature further includes a semantic role feature. The processing module 602 is further configured to: calculate, as the semantic role feature, a fourth percentage of a quantity of first semantic role labels included in the N pieces of corpus data to a quantity of all semantic role labels included in the N pieces of corpus data, where the first semantic role label is any one of all the semantic role labels; and calculate, based on the semantic role feature and the contribution degrees of the N pieces of corpus data, a contribution degree of a phrase that is in the N pieces of corpus data and that corresponds to any semantic role label. The screening module 603 is further configured to sort, in descending order of contribution degrees, phrases that are in the N pieces of corpus data and that correspond to all semantic role labels, and select corpus data that includes the first n phrases to constitute the corpus.

The apparatus in this embodiment may be configured to execute the technical solutions of the method embodiment shown in FIG. 5. Implementation principles and technical effects are similar. Details are not described herein again.

In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly executed and completed by using a hardware encoding processor, or may be executed and completed by using a combination of hardware and software modules in the encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

The memory in the foregoing embodiments may be a volatile memory or a nonvolatile memory, or may include both a volatile memory and a nonvolatile memory. The nonvolatile memory may be the read-only memory (read-only memory, ROM), the programmable read-only memory (programmable ROM, PROM), an erasable programmable read-only memory (erasable PROM, EPROM), the electrically erasable programmable read-only memory (electrically EPROM, EEPROM), or the flash memory. The volatile memory may be a random access memory (random access memory, RAM) that is used as an external buffer. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory in the system and method described in this specification includes but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for ease of convenience and brevity, for a detailed working process of the foregoing system, apparatus, and unit, refer to a corresponding process in the foregoing method embodiments. Details are not repeatedly described herein.

In the several embodiments provided in this application, it should be understood that the disclosed system, apparatus and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A corpus screening method, comprising:

obtaining N pieces of corpus data, wherein each piece of corpus data is a natural sentence, and N is a positive integer;
performing natural language processing on a first piece of corpus data to obtain M tags, wherein the first piece of corpus data is any one of the N pieces of corpus data, the natural language processing comprises one or more of lexical analysis, syntactic parsing, and semantic parsing, the M tags comprise one or more of a part-of-speech tag, a syntactic role tag, and a semantic role label, and M is a positive integer;

calculating a semantic feature of the first piece of corpus data based on the M tags, wherein the semantic feature is configured to indicate a text semantic feature of the first piece of corpus data;

calculating a contribution degree of the first piece of corpus data based on the semantic feature of the first piece of corpus data, wherein the contribution degree of the first piece of corpus data is configured to indicate a semantic weight of the first piece of corpus data in the N pieces of corpus data; and

screening the N pieces of corpus data based on contribution degrees of the N pieces of corpus data, to obtain a corpus.

2. The method according to claim 1, wherein before the performing natural language processing on a first piece of corpus data to obtain M tags, the method further comprises:

performing word segmentation processing on the first piece of corpus data to obtain K target words; and
the performing natural language processing on a first piece of corpus data to obtain M tags comprises one or more of the following methods:

performing part-of-speech tagging on the K target words to obtain K part-of-speech tags, wherein each target word corresponds to one part-of-speech tag;
performing dependency syntactic parsing on the K target words to obtain K syntactic role tags, wherein each target word corresponds to one syntactic role tag; and
performing semantic role labeling on the K target words to obtain L semantic role labels, wherein each semantic role label corresponds to one phrase, the phrase comprises one or more of the target words, and L is a positive integer.

3. The method according to claim 2, wherein the semantic feature comprises an intra-semantic-role syntactic role feature and an intra-semantic-role part-of-speech feature that are of the first piece of corpus data, and the calculating a semantic feature of the first piece of corpus data based on the M tags comprises:

calculating the intra-semantic-role syntactic role feature based on the K syntactic role tags and the L semantic role labels; and
calculating the intra-semantic-role part-of-speech feature based on the K part-of-speech tags and the L semantic role labels.

4. The method according to claim 3, wherein the calculating a contribution degree of the first piece of corpus data based on the semantic feature of the first piece of corpus data comprises:

calculating a contribution degree of a first target word based on the intra-semantic-role syntactic role feature and the intra-semantic-role part-of-speech feature, wherein the first target word is a target word that is in the K target words and that corresponds to a first syntactic role tag, and the first syntactic role tag is any one of the K syntactic role tags;
calculating a contribution degree of a first phrase based on the contribution degree of the first target word, wherein the first phrase comprises the first target word and is a phrase that is in the first piece of corpus data and that corresponds to a first semantic role label, and the first semantic role label is one of the L semantic role labels; and
calculating a contribution degree of the first piece of corpus data based on the contribution degree of the first phrase.

5. The method according to claim 4, wherein the screening the N pieces of corpus data based on contribution degrees of the N pieces of corpus data, to obtain a corpus comprises:
sorting the N pieces of corpus data in descending order of contribution degrees, and selecting first n pieces of corpus data to constitute the corpus, wherein n is a preset value.

6. The method according to claim 4, wherein the screening the N pieces of corpus data based on contribution degrees of the N pieces of corpus data, to obtain a corpus comprises:

obtaining weights of all second target words, wherein the second target word is a target word that is in the N pieces of corpus data and that is tagged as a specified predicate;
for each second target word, sorting, in descending order of contribution degrees, all second pieces of corpus data that comprise the second target word, wherein the N pieces of corpus data comprise all the second pieces of corpus data; and extracting, based on the weight of the second target word, a related quantity of the second pieces of corpus data from all the second pieces of corpus data that comprise the second target word, and adding the second pieces of corpus data to the corpus.

7. The method according to claim 4, wherein the screening the N pieces of corpus data based on contribution degrees of the N pieces of corpus data, to obtain a corpus comprises:

obtaining weights of all second phrases, wherein the second phrase is a phrase that is in the N pieces of corpus data and that is tagged with a specified semantic role label;

for each second phrase, sorting, in descending order of contribution degrees, all third pieces of corpus data that comprise the second phrase, wherein the N pieces of corpus data comprise all the third pieces of corpus data; and extracting, based on the weight of the second phrase, a related quantity of the third pieces of corpus data from all the third pieces of corpus data that comprise the second phrase, and adding the third pieces of corpus data to the corpus.

8. The method according to any one of claims 3 to 7, wherein the semantic feature further comprises a predicate quantity feature, and the calculating a semantic feature of the first piece of corpus data based on the M tags further comprises:

calculating, as the predicate quantity feature, a third percentage of a quantity of target words comprised in a fourth target word set to a quantity of target words comprised in a fifth target word set, wherein the fourth target word set comprises all target words that are in the N pieces of corpus data and that are tagged as a first predicate, the fifth target word set comprises all target words that are in the N pieces of corpus data and that are tagged as any predicate, and the first predicate is any one of the predicates;

before the screening the N pieces of corpus data based on contribution degrees of the N pieces of corpus data, to obtain a corpus, the method further comprises:

calculating, based on the predicate quantity feature and the contribution degrees of the N pieces of corpus data, contribution degrees of all target words that are in the N pieces of corpus data and that are tagged as any predicate; and

the screening the N pieces of corpus data based on contribution degrees of the N pieces of corpus data, to obtain a corpus comprises:

sorting, in descending order of contribution degrees, all target words that are in the N pieces of corpus data and that are tagged as any predicate, and selecting corpus data that comprise the first n target words to constitute the corpus.

9. The method according to any one of claims 3 to 7, wherein the semantic feature further comprises a semantic role feature, and the calculating a semantic feature of the first piece of corpus data based on the M tags further comprises:

calculating, as the semantic role feature, a fourth percentage of a quantity of first semantic role labels in the N pieces of corpus data to a quantity of all semantic role labels in the N pieces of corpus data, wherein the first semantic role label is any one of all the semantic role labels;

before the screening the N pieces of corpus data based on contribution degrees of the N pieces of corpus data, to obtain a corpus, the method further comprises:

calculating, based on the semantic role feature and the contribution degrees of the N pieces of corpus data, a contribution degree of a phrase that is in the N pieces of corpus data and that corresponds to any semantic role label;

the screening the N pieces of corpus data based on contribution degrees of the N pieces of corpus data, to obtain a corpus comprises:

sorting, in descending order of contribution degrees, phrases that are in the N pieces of corpus data and that correspond to all semantic role labels, and selecting corpus data comprising the first n phrases to constitute the corpus.

10. A corpus screening apparatus, comprising:

an obtaining module, configured to obtain N pieces of corpus data, wherein each piece of corpus data is a natural sentence, and N is a positive integer;

a processing module, configured to: perform natural language processing on a first piece of corpus data to obtain M tags, wherein the first piece of corpus data is any one of the N pieces of corpus data, the natural language processing comprises one or more of lexical analysis, syntactic parsing, and semantic parsing, the M tags comprise one or more of a part-of-speech tag, a syntactic role tag, and a semantic role label, and M is a positive integer; calculate a semantic feature of the first piece of corpus data based on the M tags, wherein the semantic feature is configured to indicate a text semantic feature of the first piece of corpus data; and calculate a contribution degree of the first piece of corpus data based on the semantic feature of the first piece of corpus data, wherein the contribution degree of the first piece of corpus data is configured to indicate a semantic weight of the first piece of corpus data in the N pieces of corpus data; and

a screening module, configured to screen the N pieces of corpus data based on contribution degrees of the N pieces of corpus data, to obtain a corpus.

11. The apparatus according to claim 10, wherein the processing module is further configured to: perform word segmentation processing on the first piece of corpus data to obtain K target words; perform part-of-speech tagging on the K target words to obtain K part-of-speech tags, wherein each target word corresponds to one part-of-speech tag; perform dependency syntactic parsing on the K target words to obtain K syntactic role tags, wherein each target word corresponds to one syntactic role tag; and perform semantic role labeling on the K target words to obtain L semantic role labels, wherein each semantic role label corresponds to one phrase, the phrase comprises one or more of the target words, and L is a positive integer.

12. The apparatus according to claim 11, wherein the semantic feature comprises an intra-semantic-role syntactic role feature and an intra-semantic-role part-of-speech feature that are of the first piece of corpus data; and the processing module is specifically configured to: calculate the intra-semantic-role syntactic role feature based on the K syntactic role tags and the L semantic role labels; and calculate the intra-semantic-role part-of-speech feature based on the K part-of-speech tags and the L semantic role labels

13. The apparatus according to claim 12, wherein the processing module is specifically configured to: calculate a contribution degree of a first target word based on the intra-semantic-role syntactic role feature and the intra-semantic-role part-of-speech feature, wherein the first target word is a target word that is in the K target words and that corresponds to a first syntactic role tag, and the first syntactic role tag is any one of the K syntactic role tags; calculate a contribution degree of a first phrase based on the contribution degree of the first target word, wherein the first phrase comprises the first target word and is a phrase that is in the first piece of corpus data and that corresponds to a first semantic role label, and the first semantic role label is one of the L semantic role labels; and calculate a contribution degree of the first piece of corpus data based on the contribution degree of the first phrase.

14. The apparatus according to claim 13, wherein the screening module is specifically configured to sort, in descending order of contribution degrees, the N pieces of corpus data, and select first n pieces of corpus data to constitute the corpus, wherein n is a preset value.

15. The apparatus according to claim 13, wherein the screening module is specifically configured to: obtain weights of all second target words, wherein the second target word is a target word that is in the N pieces of corpus data and that is tagged as a specified predicate; for each second target word, sort, in descending order of contribution degrees, all second pieces of corpus data that comprise the second target word, wherein the N pieces of corpus data comprise all the second pieces of corpus data; and extract, based on the weight of the second target word, a related quantity of the second pieces of corpus data from all the second pieces of corpus data that comprise the second target word, and add the second pieces of corpus data to the corpus.

16. The apparatus according to claim 13, wherein the screening module is specifically configured to: obtain weights of all second phrases, wherein the second phrase is a phrase that is in the N pieces of corpus data and that is labeled as a specified semantic role label; for each second phrase, sort, in descending order of contribution degrees, all third pieces of corpus data that comprise the second phrase, wherein the N pieces of corpus data comprise all the third pieces of corpus data; and extract, based on the weight of the second phrase, a related quantity of the third pieces of corpus data from all the third pieces of corpus data that comprise the second phrase, and add the third pieces of corpus data to the corpus.

17. The apparatus according to any one of claims 12 to 16, wherein the semantic feature further comprises a predicate quantity feature; the processing module is further configured to: calculate, as the predicate quantity feature, a third percentage of a quantity of target words comprised in a fourth target word set to a quantity of target words comprised in a fifth target word set, wherein the fourth target word set comprises all target words that are in the N pieces of corpus data and that are tagged as a first predicate, the fifth target word set comprises all target words that are in the N pieces of corpus data and that are tagged as any predicate, and the first predicate is any one of the predicates; and calculate, based on the predicate quantity feature and the contribution degrees of the N pieces of corpus data, contribution degrees of all target words that are in the N pieces of corpus data and that are tagged as any predicate; and the screening module is further configured to sort, in descending order of contribution degrees, all target words that are in the N pieces of corpus data and that are tagged as any predicate, and select corpus data that comprise the first n target words to constitute the corpus.

18. The apparatus according to any one of claims 12 to 16, wherein the semantic feature further comprises a semantic role feature; the processing module is further configured to: calculate, as the semantic role feature, a fourth percentage of a quantity of first semantic role labels in the N pieces of corpus data to a quantity of all semantic role labels in the N pieces of corpus data, wherein the first semantic role label is any one of all the semantic role labels; and calculate, based on the semantic role feature and the contribution degrees of the N pieces of corpus data, a contribution degree of a phrase that is in the N pieces of corpus data and that corresponds to any semantic role label; and the screening module is further configured to sort, in descending order of contribution degrees, phrases that are in the N pieces of corpus data and that correspond to all semantic role labels, and select corpus data comprising the first n phrases to constitute the corpus.

19. A device, comprising:

   one or more processors;
   a memory, configured to store one or more programs, wherein
   when the one or more programs are executed by the one or more processors, the one or more processors are
   enabled to implement the method according to any one of claims 1 to 9.

20. A computer-readable storage medium, comprising a computer program, wherein when the computer program is executed on a computer, the computer is enabled to perform the method according to any one of claims 1 to 9.

21. A computer program, wherein when the computer program is executed by a computer, the method according to any one of claims 1 to 9 is performed.

FIG. 1

FIG. 2

200

201

202

Radio
frequency
apparatus

203

Baseband
apparatus

2032

Storage unit

2033

Communication
interface

2031

Processing unit

FIG. 3

400

Memory — 403

Application program 412

Operating system 411

Application framework

Library and runtime

Kernel

404

Modem

405

Radio frequency module

406

Wi-Fi module

401

Application processor

410

Positioning module

407

Bluetooth module

402

Microcontroller unit

408

Sensor

| Light sensor | Motion sensor | ... |

4091

Display

4092

Touchscreen

4093

Audio circuit

4094

4095

409

Input/Output device

FIG. 4

Obtain N pieces of corpus data, where each piece of corpus data is a natural sentence — 501

Perform natural language processing on a first piece of corpus data to obtain M tags — 502

Calculate a semantic feature of the first piece of corpus data based on the M tags — 503

Calculate a contribution degree of the first piece of corpus data based on the semantic feature of the first piece of corpus data — 504

Screen the N pieces of corpus data based on contribution degrees of the N pieces of corpus data, to obtain a corpus — 505

FIG. 5

Obtaining module — 601

Processing module — 602

Screening module — 603

FIG. 6

## INTERNATIONAL SEARCH REPORT

International application No.

**PCT/CN2021/072782**

### A. CLASSIFICATION OF SUBJECT MATTER

G06F 40/30(2020.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

SIPOABS; DWPI; CNABS; CNTXT; IEEE; CNKI: 提取, 筛选, 权重, 文档, 角色, 语句, 标记, 句法分析, 语义分析, EXTRACT, FILT, WEIGHT, DOCUMENT, ROLE, STATEMENT, MARK, SYNTACTIC ANALYSIS, SEMANTIC ANALYSIS

### C. DOCUMENTS CONSIDERED TO BE RELEVANT

| Category* | Citation of document, with indication, where appropriate, of the relevant passages | Relevant to claim No. |
|---|---|---|
| Y | CN 105426361 A (SHANGHAI ZHIZHEN INTELLIGENT NETWORK TECHNOLOGY CO., LTD.) 23 March 2016 (2016-03-23) claims 1-16, description pages 2-9 | 1-3, 8-12, 17-21 |
| Y | CN 104268160 A (BEIJING INSTITUTE OF TECHNOLOGY) 07 January 2015 (2015-01-07) description, pages 2-7 | 1-3, 8-12, 17-21 |
| A | CN 106705974 A (NORTH CHINA ELECTRIC POWER UNIVERSITY (BAODING)) 24 May 2017 (2017-05-24) entire document | 1-21 |
| A | US 8527262 B2 (INTERNATIONAL BUSINESS MACHINES CORPORATION) 03 September 2013 (2013-09-03) entire document | 1-21 |
| A | CN 109933781 A (BEIJING INFORMATION SCIENCE & TECHNOLOGY UNIVERSITY) 25 June 2019 (2019-06-25) entire document | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2021** | **30 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/072782**

| Patent document cited in search report | | | Publication date (day/month/year) | Patent family member(s) | | | Publication date (day/month/year) |
|---|---|---|---|---|---|---|---|
| CN | 105426361 | A | 23 March 2016 | None | | | |
| CN | 104268160 | A | 07 January 2015 | CN | 104268160 | B | 06 June 2017 |
| CN | 106705974 | A | 24 May 2017 | CN | 106705974 | B | 12 May 2020 |
| US | 8527262 | B2 | 03 September 2013 | US | 2008319735 | A1 | 25 December 2008 |
| CN | 109933781 | A | 25 June 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202010067906